# EUROPEAN PATENT APPLICATION

(11) **EP 4 836 129 A1**
(43) Date of publication of application: **04.11.2026**
(21) Application number: 24948200.1
(22) Date of filing: 24.07.2024
(51) Int. Cl.: H01M 50/242, H01M 50/244, H01M 10/613, H01M 50/249

(54) **BATTERY DEVICE AND ELECTRICAL DEVICE HAVING SAME**

(71) Applicant: Contemporary Amperex Technology Co., Limited, Ningde, Fujian 352100 (CN)
(72) Inventor: GUO, Yongxiang, Ningde, Fujian 352100 (CN); WU, Guangdang, Ningde, Fujian 352100 (CN); LUO, Wenchao, Ningde, Fujian 352100 (CN); WANG, Zhi, Ningde, Fujian 352100 (CN)
(74) Representative: Ziebig Hengelhaupt Intellectual Property Attorneys Patentanwaltskanzlei PartGmbB
(86) International application number: PCT/CN2024/107218
(87) International publication number: WO 2026/020358

(57) **Abstract**

A battery device (1000) and an electrical device (1A) having same. The battery device (1000) comprises: a main box (200), the main box (200) defining an accommodating cavity (201); battery cells (300), provided in the accommodating cavity (201); a mounting beam (600), mounted on a bottom wall (202) of the main box (200) and forming an clearance channel (203) together with the bottom wall (202); a first expansion beam (100), detachably mounted on the mounting beam (600) and engaging with the battery cells (300); and a thermal management member (400), provided in the accommodating cavity (201) and engaging in heat exchange with the battery cells (300), wherein the thermal management member (400) is provided with an inlet portion (411) and an outlet portion (412), and at least one of the inlet portion (411) and the outlet portion (412) passes through the clearance channel (203).

## Description

### TECHNICAL FIELD

The present application relates to the field of battery technologies, and in particular, to a battery device and an electrical device having the same.

### BACKGROUND

In the related art, the assembly efficiency of a box of a battery device remains to be improved.

### SUMMARY

The present application aims to solve at least one of the technical problems existing in the prior art. To this end, the present application provides a battery device, and an electrical device including this battery device, where a heat management member of the battery device may be installed prior to a first expansion beam, which can reduce mutual influence between installation of the first expansion beam and installation of the heat management member, resulting in higher installation efficiency. In addition, the first expansion beam and a mounting beam may undergo respective required surface treatments separately, which can improve flexibility of the surface treatments, save treatment costs, and improve production efficiency.

According to a first aspect, an embodiment of the present application provides a battery device including: a main box, the main box defining an accommodating cavity; a battery cell disposed in the accommodating cavity; a mounting beam mounted to a bottom wall of the main box and cooperating with the bottom wall to jointly form a clearance channel; a first expansion beam detachably mounted to the mounting beam and cooperating with the battery cell; and a heat management member disposed in the accommodating cavity and cooperating with the battery cell for heat exchange, the heat management member having an inlet portion and an outlet portion, at least one of the inlet portion and the outlet portion extending through the clearance channel.

In the above technical solution, on the one hand, the battery device is provided with a mounting beam, the first expansion beam is mounted to the main box via the mounting beam, and the inlet portion and the outlet portion of the heat management member extend out through the clearance channel formed by the mounting beam, which enables the heat management member to be installed prior to the first expansion beam, and can reduce mutual influence between installation of the first expansion beam and installation of the heat management member, resulting in higher installation efficiency. On the other hand, since the first expansion beam and the mounting beam are detachably fitted, the first expansion beam and the mounting beam may undergo respective required surface treatments separately; for example, the first expansion beam may undergo anti-corrosion treatment, and the mounting beam may undergo insulation treatment, which can improve flexibility of the surface treatments, save treatment costs, and improve production efficiency.

In some embodiments, the first expansion beam includes a plurality of plate bodies, where the plurality of plate bodies are all sheet metal parts, and the plurality of plate bodies are welded to each other to constitute the first expansion beam.

In the above technical solution, since the plurality of plate bodies are welded to each other to constitute an integral first expansion beam, the structure of the first expansion beam can be simplified, processing and formation of the first expansion beam can be facilitated, and costs can be reduced. In addition, the plate bodies are configured as sheet metal parts, which can improve the structural strength of the plate bodies and improve the structural strength of the first expansion beam.

In some embodiments, the plurality of plate bodies include a first plate and a second plate, where the first plate and the second plate extend along a first direction and are arranged along a second direction, along a third direction, two ends of the first plate are respectively connected to two ends of the second plate and cooperate to define a cavity of the first expansion beam, and the third direction, the first direction, and the second direction intersect each other pairwise.

In the above technical solution, since the plurality of first plate bodies include the first plate and the second plate, and the first plate and the second plate are connected and define the cavity of the first expansion beam, the composition structure of the first expansion beam can be simplified, processing can be facilitated, and costs can be reduced.

In some embodiments, along the third direction, two ends of the first plate have a first flange and a second flange that extend toward the second plate, two ends of the second plate have a third flange and a fourth flange that extend toward the first plate, the first flange is connected to the third flange in an overlapping manner, and the second flange is connected to the fourth flange in an overlapping manner.

In the above technical solution, since the first flange and the second flange of the first plate are respectively connected to the third flange and the fourth flange of the second plate in an overlapping manner, the structure is simple, welding connection between the first plate and the second plate can be facilitated, the structural strength of a welding position can be improved, and thus the structural strength of the first expansion beam can be improved.

In some embodiments, the second plate includes a main plate and a support plate that are arranged separately, where the main plate is disposed on a side of the support plate away from the bottom wall along the third direction, the main plate is provided with a first bent edge extending away from the second plate along the second direction, the support plate is provided with a second bent edge extending away from the second plate along the second direction, and the first bent edge and the second bent edge are arranged in a stacked manner and connected to each other.

In the above technical solution, by configuring the second plate to include the main plate and the support plate that are arranged separately, the production difficulty of the second plate can be reduced, and processing efficiency can be improved. In addition, by connecting the main plate and the support plate in an overlapping and welding manner through the first bent edge and the second bent edge respectively, the structural strength of the second plate can be improved, and welding connection between the main plate and the support plate can be facilitated.

In some embodiments, the first bent edge is formed with a plurality of first fixing holes passing through the first bent edge along the third direction, the plurality of first fixing holes are arranged at intervals along the first direction, and the first expansion beam is connected to the mounting beam by fasteners passing through the first fixing holes.

In the above technical solution, the first bent edge is provided with the plurality of first fixing holes for fastening connection to the mounting beam, whereby the first expansion beam and the mounting beam may be conveniently connected through fasteners, and the plurality of first fixing holes can improve the reliability of connection between the first expansion beam and the mounting beam and the uniform stress distribution.

In some embodiments, the first bent edge includes a plurality of connection portions and a plurality of recess portions, where the plurality of recess portions and the plurality of connection portions are alternately arranged and connected along the first direction, each recess portion is formed by recessing the first bent edge toward the support plate, and each recess portion is formed with at least one first fixing hole; and the second bent edge includes a plurality of first lugs extending away from the first plate along the second direction, where the plurality of first lugs are arranged at intervals along the first direction, and a clearance notch is defined between two adjacent first lugs; where the recess portion is located in the clearance notch, and the plurality of connection portions are in one-to-one correspondence with and connected to the plurality of first lugs.

In the above technical solution, since the first bent edge is formed with the plurality of recess portions, the plurality of recess portions can improve the structural strength of the first bent edge and improve the reliability of connection of the first bent edge to the main box. In addition, the plurality of recess portions and the plurality of connection portions may cooperate to define a plurality of recessed grooves for accommodating the first lugs, whereby the first lugs may be flush with a lower side surface of the recess portion, or the recess portion may protrude from a lower side surface of the first lug, such that when the recess portion is connected to the mounting beam, the recess portion may abut against connected components, and the reliability of fastening connection is improved.

In some embodiments, a side edge of the support plate away from the main plate along the third direction is formed with a clearance groove recessed toward the main plate, and the clearance groove is configured to clear the inlet portion and the outlet portion.

In the above technical solution, by providing the clearance groove on the support plate for clearing the inlet portion and the outlet portion of the heat exchange tube, mutual interference between the support plate and the inlet portion and the outlet portion can be reduced, and the layout may be more compact and reasonable.

In some embodiments, the plurality of plate bodies further include a reinforcing plate, where the reinforcing plate extends along the first direction, and the reinforcing plate is disposed between the first plate and the second plate, and is connected to the first plate and the second plate.

In the above technical solution, since the reinforcing plate is provided between the first plate and the second plate, the reinforcing plate can enhance the overall structural strength of the first expansion beam and improve the swelling restraining effect on the battery cell.

In some embodiments, the reinforcing plate includes a flat plate portion and a bent portion, where the flat plate portion is attached to and connected to a surface of the first plate, and the bent portion is connected to the flat plate portion, and is formed as a U-shaped structure that extends along the first direction and opens toward the first plate along the second direction.

In the above technical solution, by configuring the reinforcing plate to include the flat plate portion connected to the first plate and the bent portion bent and protruding toward the second plate, not only can welding connection of the reinforcing plate to the first plate and the second plate be facilitated, but also the structural strength of the reinforcing plate can be improved, and the overall strength of the first expansion beam can be improved.

In some embodiments, the bent portion is provided in plurality, the plurality of bent portions are arranged at intervals along the first direction, and the flat plate portion is connected between two adjacent ones of the bent portions and connected to two sides of the plurality of bent portions along the first direction.

In the above technical solution, by providing the plurality of bent portions on the reinforcing plate, the structural strength of the reinforcing plate can be further enhanced, the structural strength of the first expansion beam can be enhanced, and the uniformity of structural reinforcement of the first plate and the second plate by the reinforcing plate in a height direction of the first expansion beam can also be improved, and weak strength regions of the first expansion beam can be reduced.

In some embodiments, the reinforcing plate further includes a third bent edge, where the third bent edge is connected to the flat plate portion, the third bent edge has a plurality of second lugs extending away from the first plate along the second direction, the plurality of second lugs are arranged at intervals along the first direction, and the plurality of second lugs are sandwiched between the first bent edge and the second bent edge, and are connected by welding to the first bent edge and the second bent edge.

In the above technical solution, since the reinforcing plate is further provided with the third bent edge, and the third bent edge is connected between the first bent edge and the second bent edge, the third bent edge can enhance the connection strength at a connection position of the first bent edge and the second bent edge, and improve the reliability of fastening connection of the first bent edge to the main box. In addition, the plurality of second lugs arranged at intervals can define clearance holes for clearing the recess portion of the first bent edge, and lower the probability of interference of the third bent edge with fasteners passing through the first fixing holes.

In some embodiments, the battery device further includes: a first connection plate, where the first connection plate is fixed to a side wall of the main box by fasteners, two ends of the first plate along the first direction are provided with first connection holes passing through the first plate along the second direction, and the first plate is fastened to the first connection plate by fasteners passing through the first connection holes; and a second connection plate, where the second connection plate is fixed to the side wall of the main box by fasteners, two ends of the second plate along the first direction are provided with second connection holes passing through the second plate along the second direction, and the second plate is fastened to the second connection plate by fasteners passing through the second connection holes.

In the above technical solution, since the battery device further includes the first connection plate and the second connection plate, and two sides of the first expansion beam in a thickness direction are respectively fixed to an inner wall of the main box through the first connection plate and the second connection plate, not only can fastening connection of the first expansion beam to the main box be conveniently achieved, but also the connection reliability between the first expansion beam and the main box can be improved.

In some embodiments, the mounting beam extends along the first direction and is disposed on a side of the first expansion beam away from the battery cell along the second direction, and the first expansion beam is connected to the mounting beam by fasteners and/or bonded to the mounting beam, the first direction intersecting the second direction.

In the above technical solution, since the first expansion beam is connected to the mounting beam by fasteners and/or bonded to the mounting beam by an adhesive layer, not only can assembly between the first expansion beam and the mounting beam be facilitated and assembly efficiency be improved, but also the first expansion beam and the mounting beam can undergo respective required surface pretreatments separately to improve the anti-corrosion performance and insulation performance of the first expansion beam and the mounting beam, thereby improving flexibility of the surface treatments, saving treatment costs, and improving production efficiency. In addition, the first expansion beam and the mounting beam are fixedly connected by fasteners and the adhesive layer, which can further improve the connection reliability and stability between the first expansion beam and the mounting beam.

In some embodiments, the first expansion beam has a first bent edge extending toward the mounting beam, the first bent edge is supported on a top of the mounting beam, and the first bent edge is connected to the mounting beam by fasteners.

In the above technical solution, since the mounting beam is disposed on one side of the first expansion beam along the thickness direction, and the first expansion beam is fastened to the top of the mounting beam through the first bent edge, the first bent edge can perform a positioning function, facilitate fixing the first expansion beam to the mounting beam, and improve the assembly efficiency.

In some embodiments, the mounting beam includes two first beams, where the two first beams each extend along the first direction and are arranged at intervals along the first direction, the two first beams are each fixed to the bottom wall, and the clearance channel is formed between the two first beams.

In the above technical solution, since the mounting beam includes the two first beams arranged at intervals, and the clearance channel is formed between the two first beams, this facilitates forming the clearance channel, facilitates the passage of the inlet portion and the outlet portion of the heat exchange tube through the mounting beam to connect to a current collector, simplifies the structure, and reduces the forming difficulty of the clearance channel.

In some embodiments, the first beam includes a beam body, a first support edge, and a second support edge, where the beam body extends along the first direction and has a U-shaped cross-section, the first support edge and the second support edge are respectively connected to two side edges of an opening of the beam body and extend away from each other, the first support edge and the second support edge are each connected to the bottom wall, the first support edge is located on a side of the beam body facing the first expansion beam, and a bottom surface of the first expansion beam along the third direction is supported on the first support edge.

In the above technical solution, by configuring the first beam to include the U-shaped beam body as well as the first support edge and the second support edge that are connected to two side edges of the opening of the beam body, the structural strength of the first beam can be improved, the support stability between the first beam and the bottom wall of the accommodating cavity can also be increased, and fastening connection of the first beam to the main box through the first support edge and/or the second support edge can be facilitated.

In some embodiments, the first support edge is bonded to a bottom surface of the first expansion beam by an adhesive layer, and/or a side surface of the beam body that faces the first support edge in the second direction is bonded to the first expansion beam by an adhesive layer.

In the above technical solution, by providing an adhesive layer on a surface of the first support edge and/or a side surface of the beam body, adhesive connection between the first expansion beam and the first beam of the mounting beam can be achieved, thereby achieving adhesive connection between the first expansion beam and the mounting beam, further improving the connection reliability between the first expansion beam and the mounting beam, reducing assembly difficulty, and improving assembly efficiency.

In some embodiments, the mounting beam further includes a connection beam, where the connection beam extends along the first direction and is connected between the two first beams, the connection beam is spaced apart from an inner wall of the accommodating cavity, and the connection beam, the two first beams, and the bottom wall enclose the clearance channel.

In the above technical solution, since the mounting beam further includes the connection beam, and the connection beam is connected between the two mounting beams, the mounting beam may be a continuous beam structure along the first direction, and may continuously support the first expansion beam along the first direction, whereby the support stability of the mounting beam to the first expansion beam can be improved, and in addition, defining the clearance channel can also be facilitated.

In some embodiments, the mounting beam further includes a bracket, the bracket is fixed to the bottom wall and disposed between the two first beams, and the connection beam is supported on the bracket.

In the above technical solution, by providing the bracket between the two first beams for supporting the connection beam, the support effect on the connection beam can be improved, the structural strength of the connection beam can be enhanced, and the structural strength of the first expansion beam can be further enhanced.

In some embodiments, the bracket includes: a support plate and a plurality of support legs, where the plurality of support legs are arranged along a circumferential direction of the support plate, each support leg includes a support section and an extension section that are arranged in an L-shape, the support section is connected to the bottom wall, the extension section extends away from the support section along the third direction, the support plate is connected to ends of the extension sections of the plurality of support legs away from the support section, and the connection beam is supported on the support plate and fixed to the support plate by fasteners.

In the above technical solution, since the bracket includes the support plate and the plurality of support legs supporting the support plate, the structure of the bracket can be simplified, the support stability of the bracket to the connection beam can be improved, and fixing connection of the connection beam to the bracket can be facilitated.

In some embodiments, the battery device further includes a second expansion beam, where the second expansion beam extends along the first direction and is arranged at an interval from the first expansion beam along the second direction, the battery cell is disposed between the first expansion beam and the second expansion beam, and a structure of the second expansion beam is identical to or different from a structure of the first expansion beam.

In the above technical solution, since the battery device further includes the second expansion beam, the second expansion beam can cooperate with the first expansion beam to jointly suppress swelling of the battery cell along the second direction.

In some embodiments, the heat management member includes a heat exchange tube, where a mounting groove is formed on the bottom wall, and the heat exchange tube is disposed in the mounting groove and extends along an extending direction of the mounting groove.

In the above technical solution, since the mounting groove is formed on the bottom wall of the main box, and the heat exchange tube is disposed in the mounting groove, arrangement of the heat exchange tube can be facilitated, space occupied by the heat exchange tube in the accommodating cavity can be reduced, the structure can be compact, and the energy density of the battery device can be increased.

According to a second aspect, an embodiment of the present application provides an electrical device including the battery device according to the first aspect of the present application.

In the above embodiment, by providing the battery device of the above first aspect, and since the battery device is provided with a mounting beam, the first expansion beam is mounted to the main box via the mounting beam, and the inlet portion and the outlet portion of the heat management member extend out through the clearance channel formed by the mounting beam, which enables the heat management member to be installed prior to the first expansion beam, and can reduce mutual influence between installation of the expansion beam and installation of the heat management member, resulting in higher installation efficiency. In addition, since the first expansion beam and the mounting beam are detachably fitted, the first expansion beam and the mounting beam may undergo respective required surface treatments separately; for example, the first expansion beam may undergo anti-corrosion treatment, and the mounting beam may undergo insulation treatment, which can improve flexibility of the surface treatments, save treatment costs, and improve production efficiency.

Additional aspects and advantages of the present application will be set forth in part in the following description, become apparent in part from the following description, or be learned through practice of the present application.

### BRIEF DESCRIPTION OF DRAWINGS

FIG. 1 is a schematic diagram of a vehicle according to an embodiment of the present application;
FIG. 2 is a schematic diagram of a battery device according to an embodiment of the present application;
FIG. 3 is a schematic diagram of a battery device without a battery cell according to an embodiment of the present application;
FIG. 4 is a schematic diagram of the battery device shown in FIG. 3 from another angle;
FIG. 5 is a schematic diagram of a first expansion beam shown in FIG. 3;
FIG. 6 is an exploded view of the first expansion beam shown in FIG. 3;
FIG. 7 is a partial enlarged view of the battery device shown in FIG. 3;
FIG. 8 is a partial enlarged view of the battery device shown in FIG. 4;
FIG. 9 is a schematic diagram of a main box, a mounting beam, and a second expansion beam of a battery device according to an embodiment of the present application;
FIG. 10 is a schematic diagram of the battery device shown in FIG. 9 without a connection beam; and
FIG. 11 is an enlarged view of a circled portion C in FIG. 10.

Reference signs:
1A, electrical device;
1000, battery device; 2000, controller; 3000, motor;
100, first expansion beam;
10, first plate; 11, first flange; 12, second flange; 13, first connection hole;
20, second plate; 213, second connection hole;
21, main plate; 211, third flange; 212, first bent edge; 2121, first fixing hole; 2122, recess portion; 2123, connection portion;
22, support plate; 221, fourth flange;
222, second bent edge; 2221, first lug; 2222, clearance notch; 223, clearance groove;
30, reinforcing plate; 31, flat plate portion; 32, bent portion; 33, third bent edge; 331, second lug;
200, main box; 201, accommodating cavity; 202, bottom wall; 203, clearance channel; 204, mounting groove;
300, battery cell;
400, heat management member; 410, heat exchange tube; 411, inlet portion; 412, outlet portion; 420, current collector;
510, first connection plate; 520, second connection plate;
600, mounting beam;
610, first beam; 611, beam body; 612, first support edge; 613, second support edge;
620, connection beam;
630, bracket; 631, support plate; 632, support leg; 6321, support section; 6322, extension section;
700, second expansion beam;
800, adhesive layer;
X, first direction; Y, second direction; and Z, third direction.

### DESCRIPTION OF EMBODIMENTS

The following describes in detail the embodiments of technical solutions of the present application with reference to the accompanying drawings. The following embodiments are merely intended for a clearer description of the technical solutions of the present application and therefore are used as just examples which do not constitute any limitations on the protection scope of the present application.

Unless otherwise defined, all technical and scientific terms used herein shall have the same meanings as commonly understood by those skilled in the art to which the present application relates. The terms used herein are intended to merely describe the specific embodiments rather than to limit the present application. The terms "include/comprise" and "have" and any other variations thereof in the specification, claims, and brief description of drawings of the present application are intended to cover non-exclusive inclusions.

In the description of the embodiments of the present application, the technical terms "first", "second" and the like are merely intended to distinguish between different objects, and shall not be understood as any indication or implication of relative importance or any implicit indication of the number, specific sequence, or primary-secondary relationship of the technical features indicated. In the description of the embodiments of the present application, "a plurality of" means more than two unless otherwise specifically stated.

In this specification, reference to "embodiment" means that specific features, structures or characteristics described with reference to the embodiment may be incorporated in at least one embodiment of the present application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of the present application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of the present application, the term "a plurality of" means more than two (including two).

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "axial", "radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the description of the embodiments of the present application, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the present application as appropriate to specific situations.

Currently, from a perspective of the market development, application of traction batteries is becoming increasingly extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In a battery, a plurality of battery cells are disposed in a box, and when the battery cells operate, swelling occurs inside the battery cells. To limit the positions of the battery cells and reduce the swelling amount of the battery cells, expansion beams are provided at two ends of the box along the stacking arrangement direction of the plurality of battery cells, and the two expansion beams respectively abut against two sides of the plurality of battery cells, so as to fix the positions of the plurality of battery cells and improve the stability of the battery cells.

Meanwhile, in the battery, in order to make the battery cells operate under suitable temperature conditions, a heat management member is provided in the box, and the heat management member includes a heat exchange member and a current collector. When the heat management member is directly disposed inside the box, the heat exchange member and the current collector are usually arranged on two sides of the expansion beam. For example, when the heat exchange member is arranged between a bottom wall of the box and the battery cells, the current collector is located on a side of the expansion beam away from the battery cells.

During assembly of the battery, adhesive needs to be applied above the heat exchange tube to be in contact with the bottom of the battery cell, and in the adhesive application process, due to bubbles, insufficient adhesive application area, or the like, the bottoms of the battery cells may be directly in contact with the heat exchange member, thereby causing insulation withstand voltage failure of the battery system. Therefore, insulation spraying needs to be performed on the box and a contact region between the cold plate and the module. In addition, for a sheet metal box, to ensure no rusting during long-term use, an overall surface electrophoretic treatment needs to be performed on the box.

For a solution where a heat exchange member having a U-shaped heat exchange tube is disposed inside a sheet metal box, structural adhesive needs to be applied at the contact interface between the bottom of the heat exchange member and the box, so as to ensure that the heat exchange member is in close contact with the box without deformation or warping. A water inlet and a water outlet of the U-shaped heat exchange tube need to be arranged outside the expansion beam, and the expansion beam on the side of the water inlet and outlet of the heat exchange tube needs to provide clearance for the water inlet and the water outlet of the U-shaped heat exchange tube. Therefore, during assembly, the heat exchange member must be installed on the bottom plate of the box first and then the expansion beam is welded.

In the related art, the box is manufactured in the following manner.

Solution 1. No treatment is performed on surfaces of the heat exchange member and the box. After adhesive is applied at the interface between the heat exchange member and the box, the heat exchange member is adhered to the box, and the expansion beam is welded. Then the box is placed in an electrophoresis tank for electrophoresis, and after electrophoresis is completed, insulation spraying is performed on the contact region between the box and the module.

However, in this solution: the electrophoretic solution can not penetrate into the contact interface between the box and the heat exchange member, resulting in long-term corrosion risk; after adhesive is applied at the interface between the heat exchange member and the box and then electrophoresis is performed, the electrophoretic solution will wash off the adhesive, leading to poor bonding between the heat exchange member and the box; and after electrophoresis is completed, insulation spraying is performed, since insulation spraying needs to be performed at high temperature, the high temperature will melt the structural adhesive, which will also lead to poor connection between the box and the heat exchange member.

Solution 2. Insulation spraying is first performed on the surface of the heat exchange member. Electrophoresis is performed in advance on the expansion beam of the box and the main body of the box. Insulation spraying is performed in advance on the contact region between the box and the battery cell. After adhesive is applied to the interface between the heat exchange member and the box, the heat exchange member is adhered to the box, and then the expansion beam is welded.

However, in this solution, since both the expansion beam and the bottom plate of the box are covered with electrophoretic paint, the expansion beam can not be welded to the box, affecting the connection reliability between the expansion beam and the box.

Based on the above considerations, in order to achieve reliable connection between an expansion beam and a main box after surface treatments of the expansion beam and the main box are completed, the present application designs a battery device. A mounting beam is provided in the main box, a clearance channel is formed between the mounting beam and a bottom wall of the main box, an inlet portion and an outlet portion of a heat management member extend through a clearance channel, and a first expansion beam is detachably mounted to the mounting beam. During assembly of the battery device, electrophoresis and/or insulation spraying may be pre-performed on the main box, the first expansion beam, and/or the mounting beam; next, the heat management member is embedded on the bottom wall of the main box; then the mounting beam is installed, and finally the first expansion beam is fixed to the mounting beam. Thus, on the one hand, the battery device is provided with a mounting beam, the first expansion beam is mounted to the main box via the mounting beam, and the inlet portion and the outlet portion of the heat management member extend out through the clearance channel formed by the mounting beam, which enables the heat management member to be installed prior to the first expansion beam, and can reduce mutual influence between installation of the expansion beam and installation of the heat management member, resulting in higher installation efficiency. On the other hand, since the first expansion beam and the mounting beam are detachably fitted, the first expansion beam and the mounting beam may undergo respective required surface treatments separately; for example, the first expansion beam may undergo anti-corrosion treatment, and the mounting beam may undergo insulation treatment, which can improve flexibility of the surface treatments, save treatment costs, and improve production efficiency.

The battery device (Battery Apparatus) mentioned in the embodiments of the present application may include one or more battery cell assemblies to provide voltage and capacity. The battery cell assembly (Battery Cell Assembly) may include one or more battery cells, and when a plurality of battery cells are provided, the plurality of battery cells are connected in series, parallel, or a hybrid combination via a busbar component.

In some embodiments, a battery cell assembly (Battery Cell Assembly) is generally formed by arranging a plurality of battery cells. By way of example, the battery cell assembly may be a battery module (Battery Module), and the battery module is formed by arranging and fixing a plurality of battery cells into an independent module. By way of example, the battery module may be formed by bundling a plurality of battery cells with straps.

In some embodiments, the battery device may be a battery pack (battery Pack). The battery pack includes a box and one or more battery cell assemblies, where the battery cell assemblies are accommodated in the box.

By way of example, the battery cell assembly may be a battery module, and the battery cell assembly may be accommodated in the box by fixing the battery module in the box.

By way of example, the battery cell assembly may alternatively be accommodated in the box by directly fixing a plurality of battery cells to the box.

By way of example, the box may include a first box body and a second box body. The first box body and the second box body are fastened together to form an enclosed space inside the box for accommodating the battery cell assembly. The term "enclosed" herein means covered or closed, and may be hermetically sealed or non-sealed. The first box body may be a top cover or a bottom plate.

By way of example, the box may include a top cover, a frame, and a bottom plate. The top cover and the bottom plate are respectively connected to the frame to form an enclosed space inside the box for accommodating the battery cell assembly.

By way of example, the box may be part of a chassis structure of a vehicle. For example, the top cover of the box may constitute at least part of a floor of the vehicle, or the frame of the box may constitute at least part of cross beams and longitudinal beams of the vehicle.

In some embodiments, the battery device refers to an energy storage device. The energy storage device includes a box, and at least one side of the box is provided with a door. The energy storage device includes an energy storage container, an energy storage cabinet, and the like.

The technical solutions described in the embodiments of the present application are all applicable to various electrical devices using battery cells and battery devices, such as mobile phones, portable devices, notebook computers, battery cars, electric toys, electric tools, vehicles, ships, and aerospace vehicles. For example, the aerospace vehicles include airplanes, rockets, space shuttles, spaceships, and the like.

For ease of description in the following embodiments, an electrical device 1A configured as a vehicle is taken as an example to describe in detail the structures of the electrical device 1A and the battery device of the present application.

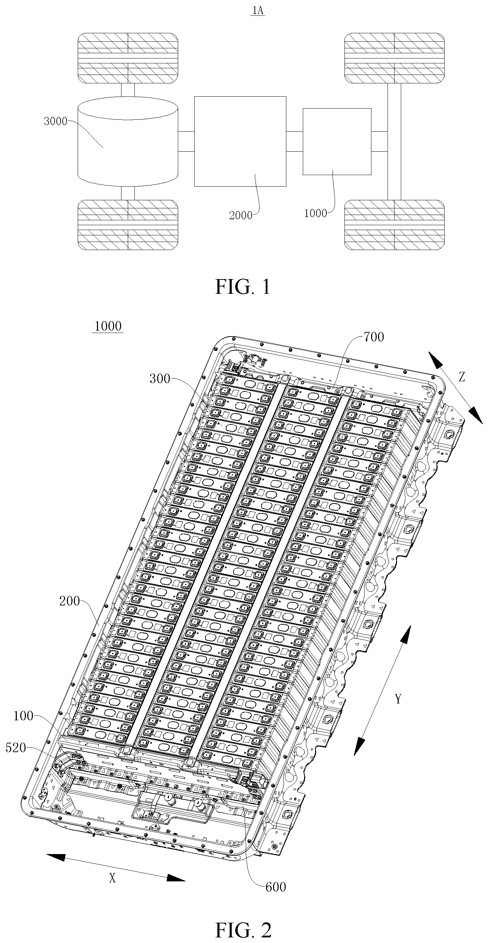

Referring to FIG. 1, FIG. 1 is a structural schematic diagram of the electrical device 1A configured as a vehicle according to some embodiments of the present application. The vehicle may be a fuel vehicle, a gas vehicle, or a new energy vehicle, and the new energy vehicle may be a battery electric vehicle, a hybrid electric vehicle, an extended-range electric vehicle, or the like. The vehicle is provided with a battery device 1000, and the battery device 1000 may be disposed at a bottom, a head, or a tail of the vehicle. The battery 1000 device may be used for power supply of the vehicle, for example, the battery 1000 device may serve as an operating power source of the vehicle. The vehicle may further include a controller 2000 and a motor 3000, where the controller 2000 is configured to control the battery device 1000 to supply power to the motor 3000, for example, for power needs during starting, navigation, and running of the vehicle. In some embodiments of the present application, the battery device 1000 may not only serve as an operating power source of the vehicle, but also as a driving power source of the vehicle, replacing or partially replacing fuel or natural gas to provide driving power for the vehicle.

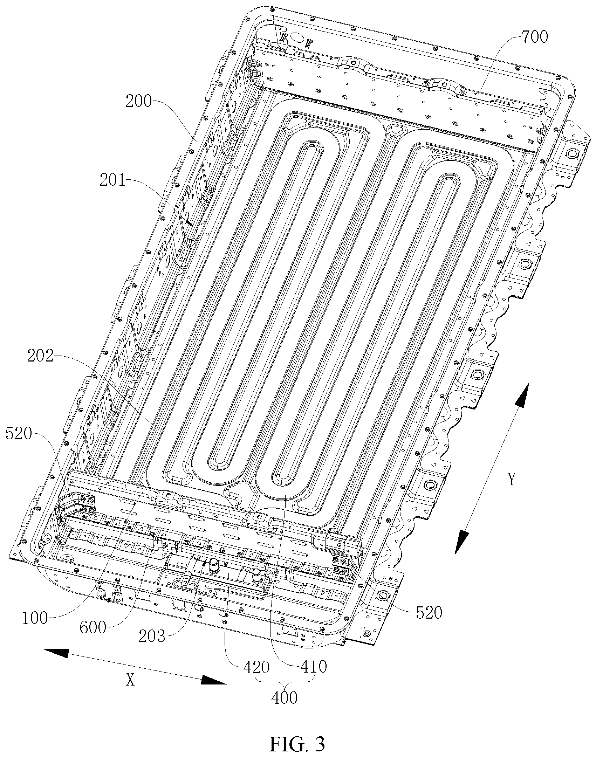

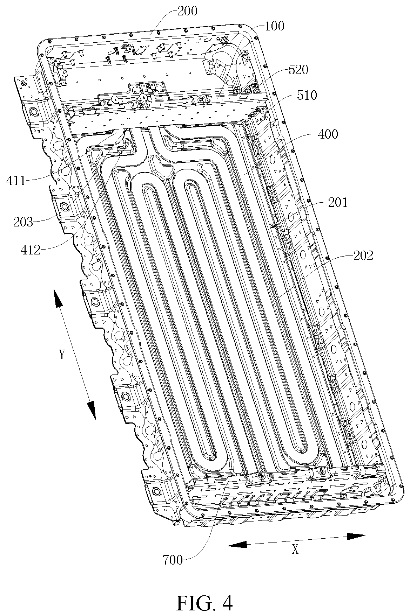

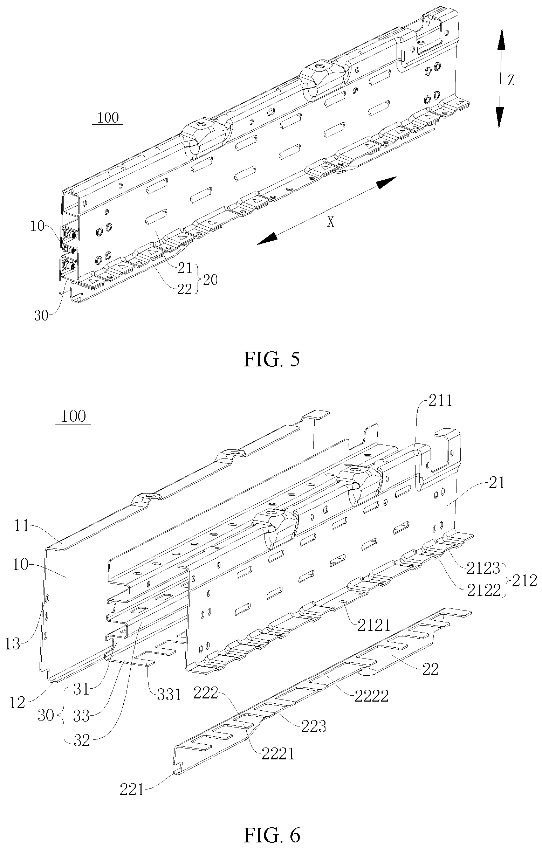

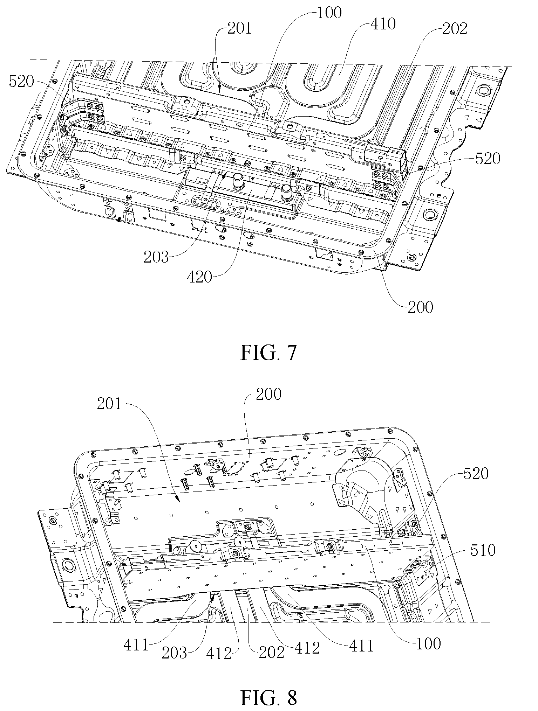

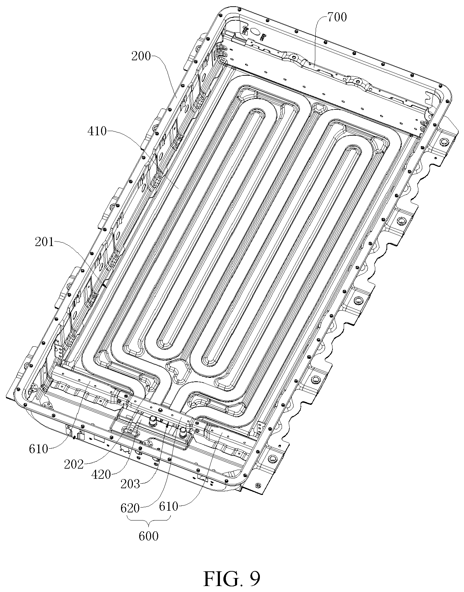

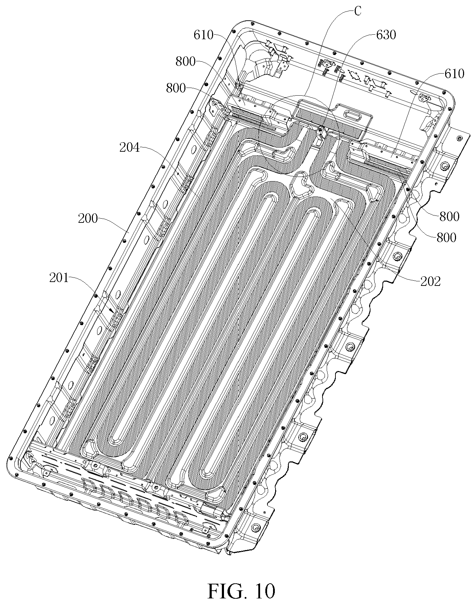

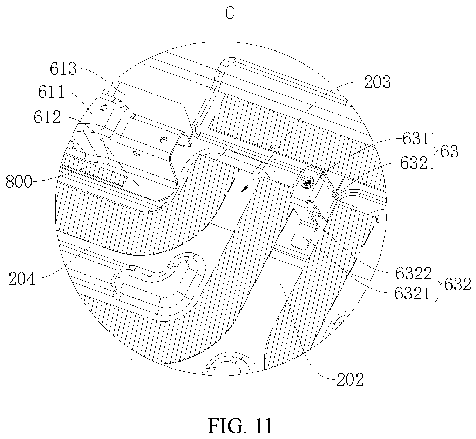

The battery device 1000 according to the embodiments of the first aspect of the present application is described below with reference to FIGs. 2 to 8. Referring to FIG. 2, FIG. 2 is a structural schematic diagram of the battery device 1000 provided according to some embodiments of the present application. FIG. 3 is a schematic diagram of the battery device 1000 without a battery cell 300 according to an embodiment of the present application; FIG. 4 is a schematic diagram of the battery device 1000 shown in FIG. 3 from another angle; FIG. 5 is a schematic diagram of a first expansion beam 100 shown in FIG. 3; FIG. 6 is an exploded view of the first expansion beam 100 shown in FIG. 5; FIG. 7 is a partial enlarged view of the battery device 1000 according to an embodiment of the present application; FIG. 8 is a partial enlarged view of the battery device 1000 shown in FIG. 4; FIG. 9 is a schematic diagram of a main box 200, a mounting beam 600, and a second expansion beam 700 of the battery device 1000 according to an embodiment of the present application; FIG. 10 is a schematic diagram of the battery device 1000 shown in FIG. 9 without a connection beam 620; and FIG. 11 is an enlarged view of a circled portion C in FIG. 10.

For ease of description, a length direction of the first expansion beam 100 (a width direction of the main box 200) is defined as a first direction X, a thickness direction of the first expansion beam 100 (a length direction of the main box 200) is defined as a second direction Y, and a height direction of the first expansion beam 100 (a height direction of the main box 200) is defined as a third direction Z. The first direction X, the second direction Y, and the third direction Z are perpendicular to each other pairwise. In a specific example, the first direction X is a left-right direction, the second direction Y is a front-rear direction, and the third direction Z is an up-down direction.

An embodiment of the present application provides a battery device 1000. The battery device 1000 includes a main box 200, a battery cell 300, a heat management member 400, a mounting beam 600, and a first expansion beam 100.

As shown in FIGs. 3 and 4, the main box 200 defines an accommodating cavity 201; the battery cell 300 is disposed in the accommodating cavity 201; the mounting beam 600 is mounted to a bottom wall 202 of the main box 200, and cooperates with the bottom wall 202 to jointly form a clearance channel 203; the first expansion beam 100 is detachably mounted to the mounting beam 600, and the first expansion beam 100 cooperates with the battery cell 300; and the heat management member 400 is disposed in the accommodating cavity 201, the heat management member 400 cooperates with the battery cell 300 for heat exchange, the heat management member 400 has an inlet portion 411 and an outlet portion 412, and at least one of the inlet portion 411 and the outlet portion 412 extends through the clearance channel 203.

For example, the main box 200 may be a hollow structure open on one side in the third direction Z. An inner space of the main box 200 is the accommodating cavity 201, and the accommodating cavity 201 may be used to arrange a plurality of battery cells 300, the heat management member 400, and other electrical components for the battery device 1000. In some examples, before assembly of the battery device 1000, the main box 200 may be subjected to electrophoresis in advance to form an electrophoretic coating on a surface of the main box 200, which can improve the anti-corrosion performance of the main box 200.

The battery cell 300 may be provided in plurality. The plurality of battery cells 300 may constitute a plurality of battery cell assemblies, the plurality of battery cell assemblies are sequentially arranged along the first direction, and each battery cell assembly may include a plurality of battery cells 300 stacked along the second direction. The first expansion beam 100 and the mounting beam 600 may be disposed on one side of the plurality of battery cells 300 along the second direction.

The mounting beam 600 is disposed in the accommodating cavity 201, the mounting beam 600 extends along the first direction X, and the mounting beam 600 is fixed to the bottom wall 202, and cooperates with the bottom wall 202 to define the clearance channel 203.

The mounting beam 600 is fixed to the bottom wall 202. For example, the mounting beam 600 may be connected to the bottom wall 202 of the accommodating cavity 201 by fasteners, and two ends of the mounting beam 600 along the first direction X may be fixedly connected to a side wall of the accommodating cavity 201, for example, two ends of the mounting beam 600 along the first direction X may be connected to the side wall of the accommodating cavity 201 by fasteners or may be connected by welding.

The first expansion beam 100 extends along the first direction, and the first expansion beam 100 is detachably mounted to the mounting beam 600. For example, the first expansion beam 100 may be connected to the mounting beam 600 by fasteners, or may be snap-fitted to and/or bonded to the mounting beam 600. In this way, the first expansion beam 100 is fixed and supported on the mounting beam 600. On the one hand, connection between the first expansion beam 100 and the main box 200 can be more convenient, installation of the first expansion beam 100 can be facilitated, and installation efficiency can be improved. On the other hand, the mounting beam 600 can enhance the structural strength of the first expansion beam 100 and improve the swelling restraining effect on the battery cell 300.

Since the first expansion beam 100 and the mounting beam 600 are detachably connected, at least one of the first expansion beam 100 and the mounting beam 600 may be individually subjected to a surface treatment in advance, for example, at least one of the first expansion beam 100 and the mounting beam 600 may undergo electrophoretic treatment and/or insulation spraying. The surface treatment of the first expansion beam 100 and/or the mounting beam 600 may be electrophoretic treatment and/or insulation spraying on part of the surface of the first expansion beam 100 and the mounting beam 600, or electrophoretic treatment and/or insulation spraying on all surfaces of the first expansion beam 100 and/or the mounting beam 600. Thus, the anti-corrosion performance and insulation performance of the first expansion beam 100 and/or the mounting beam 600 can be improved.

In one example, the first expansion beam 100 and the mounting beam 600 may be separately subjected to respective required surface treatments, for example, anti-corrosion treatment (such as electrophoresis) on the first expansion beam 100, and insulation treatment (such as insulation spraying) on the mounting beam 600, whereby flexibility of surface treatments of the first expansion beam 100 and the mounting beam 600 can be improved, treatment costs of the first expansion beam 100 and the mounting beam 600 may be saved, and production efficiency can be improved.

The heat management member 400 is disposed in the accommodating cavity 201, for example, the heat management member 400 is disposed at a position of the bottom wall 202. The heat management member 400 includes one or more heat exchange tubes 410, where the heat exchange tube 410 may be a flat tube, and when the battery cell 300 is disposed in the accommodating cavity 201, the heat management member 400 may be configured to cooperate with the battery cell 300 for heat exchange, so that the battery cell 300 operates within a suitable temperature range. During operation of the battery device 1000, external heat exchange fluid may enter the heat exchange tube 410 from the inlet portion 411, undergoes heat exchange with the battery cell 300, and then flow out from the outlet portion 412.

At least one of the inlet portion 411 and the outlet portion 412 extends through the clearance channel 203, that is, only the inlet portion 411 may extend through the clearance channel 203, only the outlet portion 412 may extend through the clearance channel 203, or both the inlet portion 411 and the outlet portion 412 may extend through the clearance channel 203, so as to facilitate connection of the inlet portion 411 and the outlet portion 412 of the heat management member 400 to an external pipeline. In addition, the inlet portion 411 and the outlet portion 412 may extend through the same clearance channel 203, or the inlet portion 411 and the outlet portion 412 may extend through different clearance channels 203 respectively.

The heat management member 400 may further include a current collector 420, where the current collector 420 and the heat exchange tube 410 are respectively disposed on two sides of the first expansion beam 100 along the second direction. To achieve connection of the inlet portion 411 and the outlet portion 412 of the heat exchange tube 410 to the current collector 420, in this embodiment, the first expansion beam 100 is mounted to the mounting beam 600. In this way, the mounting beam 600 may lift the first expansion beam 100 to space the first expansion beam 100 apart from the bottom wall 202 of the main box 200. Meanwhile, the mounting beam 600 cooperates with the bottom wall 202 of the main box 200 to define the clearance channel 203, the clearance channel 203 communicates spaces on two sides of the mounting beam 600 in the second direction Y. The inlet portion 411 and the outlet portion 412 of the heat exchange tube 410 may pass through the clearance channel 203 from one side of the mounting beam 600 and extend to the other side of the mounting beam 600 to connect to the current collector 420 located on the other side of the mounting beam 600.

In the process of assembling the battery device 1000, the main box 200, the first expansion beam 100, and/or the mounting beam 600 may be subjected to surface treatments (such as insulation spraying and electrophoresis) first. Thereafter, at least part of the mounting beam 600 may be mounted to the main box 200 first, such that the main box 200 cooperates with the mounting beam 600 to jointly define the clearance channel 203. The heat management member 400 is then disposed in the main box 200, and the inlet portion 411 and the outlet portion 412 of the heat management member 400 extend out from the position of the clearance channel 203. Finally, the first expansion beam 100 is mounted to the mounting beam 600. In this way, during assembly of the battery device 1000 of this embodiment, the heat management member 400 may be mounted to the main box 200 prior to the first expansion beam 100, thereby reducing mutual influence between installation of the first expansion beam 100 and installation of the heat management member 400, and improving installation efficiency.

In another example, during assembly of the battery device 100, after completing surface treatments of the main box 200, the first expansion beam 100, and/or the mounting beam 600, the heat management member 400 may also be mounted to the main box 200 first, such that the inlet portion 411 and the outlet portion 412 of the heat management member 400 are located at a preset position of the clearance channel 203 of the mounting beam 600, then the mounting beam 600 is installed, and finally the first expansion beam 100 is installed. In this way, the heat management member 400 can be mounted to the main box 200 prior to the mounting beam 600 and the first expansion beam 100, thereby reducing the influence of installation of the first expansion beam 100 on installation of the heat management member 400, and improving installation efficiency.

In the above technical solution, on the one hand, the battery device 1000 is provided with the mounting beam 600, the first expansion beam 100 is mounted to the main box 200 via the mounting beam 600, and the inlet portion 411 and the outlet portion 412 of the heat management member 400 extend out through the clearance channel 203 formed by the mounting beam 600, which enables the heat management member 400 to be installed prior to the first expansion beam 100, and can reduce mutual influence between installation of the first expansion beam 100 and installation of the heat management member 400, resulting in higher installation efficiency. On the other hand, since the first expansion beam 100 and the mounting beam 600 are detachably fitted, the first expansion beam 100 and the mounting beam 600 may undergo respective required surface treatments separately; for example, the first expansion beam 100 may undergo anti-corrosion treatment, and the mounting beam 600 may undergo insulation treatment, which can improve flexibility of the surface treatments, save treatment costs, and improve production efficiency.

In some embodiments of the present application, the first expansion beam 100 includes a plurality of plate bodies (such as a first plate 10, a second plate 20, and a reinforcing plate 30 described below), where the plurality of plate bodies are all sheet metal parts, and the plurality of plate bodies are welded to each other to constitute the first expansion beam 100.

As shown in FIGs. 5 and 6, for example, the first expansion beam 100 may include two, three, four, five, six, or more plate bodies. The plate body is a sheet metal part, that is, the plate body is a metal plate, for example, the plate body may be a steel plate, and further, the plate body may be a steel plate with a yield strength greater than or equal to 340 MPa and a tensile strength greater than or equal to 590 MPa.

In the manufacturing process of the first expansion beam 100, the plurality of plate bodies of the first expansion beam 100 may be processed from a sheet metal substrate first, then the plurality of plate bodies are connected by welding, and finally, the welded first expansion beam 100 is placed in an electrophoresis tank for electrophoresis.

In the above technical solution, since the plurality of plate bodies are welded to each other to constitute an integral first expansion beam 100, the structure of the first expansion beam 100 can be simplified, processing and forming of the first expansion beam 100 can be facilitated, and costs can be reduced. In addition, the plate bodies are configured as sheet metal parts, which can improve the structural strength of the plate bodies and improve the structural strength of the first expansion beam 100.

In some embodiments of the present application, the plurality of plate bodies include a first plate 10 and a second plate 20, where the first plate 10 and the second plate 20 extend along a first direction X and are arranged along a second direction Y, along a third direction Z, two ends of the first plate 10 are respectively connected to two ends of the second plate 20 and cooperate to define a cavity of the first expansion beam 100, and the third direction Z intersects the first direction X and the second direction Y pairwise.

Specifically, as shown in FIGs. 5 and 6, the first plate 10 and the second plate 20 are plate-shaped extending along a length direction and a height direction of the first expansion beam 100, the first plate 10 and the second plate 20 are arranged along a thickness direction of the first expansion beam 100, two ends of the first plate 10 along a height direction of the first expansion beam 100 are respectively connected to two ends of the second plate 20 along the height direction of the first expansion beam 100, and constitute the first expansion beam 100 having a cavity, that is, the first expansion beam 100 is a hollow beam. In this way, compared with an extruded expansion beam, the first expansion beam 100 of this embodiment has a simpler structure, easier processing, and lower cost.

It should be noted that the third direction Z intersecting the first direction X and the second direction Y pairwise means that: the first direction X and the second direction Y are arranged at an included angle, and the included angle between the first direction X and the second direction Y is greater than 0° and less than 180°. For example, the first direction X and the second direction Y may be arranged at an included angle of 30°, 60°, 90°, 120°, or 150°. The third direction Z and the first direction X are arranged at an included angle, and the included angle between the third direction Z and the first direction X is greater than 0° and less than 180°. For example, the third direction Z and the first direction X may be arranged at an included angle of 30°, 60°, 90°, 120°, or 150°. The third direction Z and the second direction Y are arranged at an included angle, and the included angle between the third direction Z and the second direction Y is greater than 0° and less than 180°. For example, the third direction Z and the second direction Y may be arranged at an included angle of 30°, 60°, 90°, 120°, or 150°.

In the above technical solution, since the plurality of first plate 10 bodies include the first plate 10 and the second plate 20, and the first plate 10 is connected to the second plate 20 to define the cavity of the first expansion beam 100, which can simplify the composition structure of the first expansion beam 100, facilitate processing, and reduce costs.

In some embodiments of the present application, along the third direction Z, two ends of the first plate 10 have a first flange 11 and a second flange 12 that extend toward the second plate 20, two ends of the second plate 20 have a third flange 211 and a fourth flange 221 that extend toward the first plate 10, the first flange 11 is connected to the third flange 211 in an overlapping manner, and the second flange 12 is connected to the fourth flange 221 in an overlapping manner.

As shown in FIGs. 5 and 6, two ends of the first plate 10 along a height direction of the first expansion beam 100 are respectively formed with the first flange 11 and the second flange 12, the first flange 11 and the second flange 12 each extend toward the second plate 20 along the thickness direction of the first expansion beam 100, where the first flange 11 and the second flange 12 may be formed by bending two ends of the first plate 10 toward the second plate 20. In this case, a cross-section of the first plate 10 perpendicular to the length direction is U-shaped and opens toward the second plate 20.

Two ends of the second plate 20 along the height direction of the first expansion beam 100 are respectively formed with the third flange 211 and the fourth flange 221, and the third flange 211 and the fourth flange 221 each extend toward the first plate 10 along the thickness direction of the first expansion beam 100, where the third flange 211 and the fourth flange 221 may be formed by bending two ends of the second plate 20 toward the first plate 10. In this case, a cross-section of the second plate 20 perpendicular to the length direction is U-shaped and opens toward the first plate 10.

During assembly of the first plate 10 and the second plate 20, the first flange 11 and the third flange 211 are stacked and welded along the height direction of the first expansion beam 100, and the second flange 12 and the fourth flange 221 are stacked and welded along the height direction of the first expansion beam 100. Thereby, welding connection between the first plate 10 and the second plate 20 can be facilitated, and forming the first expansion beam 100 as a beam having a cavity can be facilitated. In addition, lapping and welding the first flange 11 and the third flange 211, and lapping and welding the second flange 12 and the fourth flange 221 can also improve the connection strength between the first plate 10 and the second plate 20, and enhance the overall strength of the first expansion beam 100.

In the above technical solution, since the first flange 11 and the second flange 12 of the first plate 10 are respectively connected to the third flange 211 and the fourth flange 221 of the second plate 20 in an overlapping manner, the structure is simple, welding connection between the first plate 10 and the second plate 20 can be facilitated, the structural strength of a welding position can be improved, and thus the structural strength of the first expansion beam 100 can be improved.

In some embodiments of the present application, the second plate 20 includes a main plate 21 and a support plate 22 that are arranged separately, where the main plate 21 is disposed on a side of the support plate 22 away from the bottom wall 202 along the third direction Z, the main plate 21 is provided with a first bent edge 212 extending away from the second plate 20 along the second direction Y, the support plate 22 is provided with a second bent edge 222 extending away from the second plate 20 along the second direction Y, and the first bent edge 212 and the second bent edge 222 are arranged in a stacked manner and connected to each other.

As shown in FIGs. 5 and 6, the main plate 21 and the support plate 22 are arranged in a height direction of the first expansion beam 100. The main plate 21 is plate-shaped extending along a length direction and a height direction of the first expansion beam 100. The support plate 22 is connected to a side of the main plate 21 facing the heat exchange tube 410. The main plate 21 and the support plate 22 are both independent components, and the main plate 21 and the support plate 22 may be connected by welding. The separately arranged main plate 21 and support plate 22 can reduce the processing difficulty of the second plate 20 and improve production efficiency.

Further, a side edge of the main plate 21 facing the support plate 22 is provided with the first bent edge 212, a side edge of the support plate 22 facing the main plate 21 is provided with the second bent edge 222, and the first bent edge 212 is connected to the second bent edge 222 in an overlapping manner. For example, the first bent edge 212 and the second bent edge 222 are stacked along the height direction of the first expansion beam 100 and connected by welding. This not only can improve the connection reliability between the main plate 21 and the support plate 22, but also can enhance the structural strength of the second plate 20 and the structural strength of the first expansion beam 100.

Further, the first bent edge 212 and the second bent edge 222 each extend away from the cavity along a thickness direction of the first expansion beam 100. In this way, the first bent edge 212 and the second bent edge 222 can be located outside the cavity, which facilitates welding operation of the first bent edge 212 and the second bent edge 222.

In addition, the third flange 211 is formed on a side edge of the main plate 21 away from the support plate 22, and the fourth flange 221 is formed on a side edge of the support plate 22 away from the main plate 21.

In the above technical solution, by configuring the second plate 20 to include the main plate 21 and the support plate 22 that are arranged separately, the production difficulty of the second plate 20 can be reduced, and processing efficiency can be improved. In addition, by connecting the main plate 21 and the support plate 22 in an overlapping and welding manner through the first bent edge 212 and the second bent edge 222 respectively, the structural strength of the second plate 20 can be improved, and welding connection between the main plate 21 and the support plate 22 can be facilitated.

In some embodiments of the present application, the first bent edge 212 is formed with a plurality of first fixing holes 2121 passing through the first bent edge 212 along the third direction Z, where the plurality of first fixing holes 2121 are arranged at intervals along the first direction X, and the first expansion beam 100 is connected to the mounting beam 600 by fasteners passing through the first fixing holes 2121.

As shown in FIGs. 5 and 6, the first bent edge 212 extends along a length direction and a thickness direction of the first expansion beam 100, the first bent edge 212 is provided with a plurality of first fixing holes 2121. For example, the first bent edge 212 may be provided with two, four, six, eight, ten, twelve, fourteen, or more first fixing holes 2121, and the plurality of first fixing holes 2121 are arranged at intervals along the length direction of the first expansion beam 100. During assembly, the integrally welded and electrophoretically treated first expansion beam 100 is placed into the main box 200, and then a plurality of fasteners respectively pass through corresponding first fixing holes 2121 to connect to the mounting beam 600.

The fasteners may be bolts, rivet nuts, or the like. The first fixing hole 2121 may be a circular hole or other polygonal holes.

In the above technical solution, the first bent edge 212 is provided with a plurality of first fixing holes 2121 for fastening connection to the mounting beam 600. This can facilitate the connection between the first expansion beam 100 and the mounting beam 600 via fasteners, and the plurality of first fixing holes 2121 can improve the reliability of connection and uniform stress distribution between the first expansion beam 100 and the mounting beam 600.

In some embodiments of the present application, the first bent edge 212 includes a plurality of connection portions 2123 and a plurality of recess portions 2122, where the plurality of recess portions 2122 and the plurality of connection portions 2123 are alternately arranged and connected along the first direction X, the recess portion 2122 is formed by recessing the first bent edge 212 toward the support plate 22, and each recess portion 2122 is formed with at least one first fixing hole 2121; and the second bent edge 222 includes a plurality of first lugs 2221 extending away from the first plate 10 along the second direction Y, where the plurality of first lugs 2221 are arranged at intervals along the first direction X, a clearance notch 2222 is defined between two adjacent first lugs 2221; where the recess portion 2122 is located in the clearance notch 2222, and the plurality of connection portions 2123 are in one-to-one correspondence with and connected to the plurality of first lugs 2221.

As shown in FIGs. 5 and 6, the first bent edge 212 may include a plurality of recess portions 2122 and a plurality of connection portions 2123, where the plurality of recess portions 2122 and the plurality of connection portions 2123 are alternately arranged along a length direction of the first bent edge 212, and two ends of the first bent edge 212 along the length direction are both connection portions 2123. The recess portion 2122 is recessed and formed relative to the connection portion 2123 in a direction toward the support plate 22, for example, the recess portion 2122 may be stamped and formed on the first bent edge 212 in the direction toward the support plate 22. Two adjacent recess portions 2122 cooperate with the connection portion 2123 to define a recessed groove opening toward the second bent edge 222, and the recessed groove penetrates two side edges of the first bent edge 212 along a width direction of the first bent edge 212.

Meanwhile, the first fixing hole 2121 is formed on the recess portion 2122, and penetrates the recess portion 2122 along a thickness direction of the first bent edge 212. Each recess portion 2122 may be formed with at least one first fixing hole 2121. For example, one part of the plurality of recess portions 2122 may be formed with one first fixing hole 2121, and another part of the plurality of recess portions 2122 may be formed with two or three first fixing holes 2121.

The second bent edge 222 is formed with a plurality of first lugs 2221 arranged at intervals, where the plurality of first lugs 2221 are formed as rectangular plate shapes extending along a length direction and a width direction of the second bent edge 222, the plurality of first lugs 2221 are in one-to-one correspondence with the plurality of connection portions 2123 and located in the recessed groove defined by the corresponding first lug 2221. A clearance notch 2222 is defined between two adjacent first lugs 2221, and the plurality of recess portions 2122 are in one-to-one correspondence with and extend into the plurality of clearance notches 2222.

When the first bent edge 212 is connected to the second bent edge 222, the first lug 2221 of the second bent edge 222 fits into the recessed groove at the position of the corresponding connection portion 2123, and is connected to the corresponding connection portion 2123 by welding, the recess portion 2122 is in one-to-one correspondence with the clearance notch 2222, and fits into the corresponding clearance notch 2222, so that the clearance notch 2222 exposes the first fixing hole 2121, thereby facilitating the fastener extending through the first fixing hole 2121 to pass through the clearance notch 2222 and connect to the main box 200.

In the above technical solution, since the first bent edge 212 is formed with the plurality of recess portions 2122, the plurality of recess portions 2122 can improve the structural strength of the first bent edge 212 and improve the reliability of connection of the first bent edge 212 to the main box 200. Meanwhile, the plurality of recess portions 2122 and the plurality of connection portions 2123 can cooperate to define a plurality of recessed grooves for accommodating the first lugs 2221, whereby the first lug 2221 may be flush with a lower side surface of the recess portion 2122, or the recess portion 2122 may protrude beyond a lower side surface of the first lug 2221, such that when the recess portion 2122 is connected to the mounting beam 600, the recess portion 2122 can abut against a corresponding component to be connected, thereby improving the reliability of fastening connection.

In some embodiments of the present application, a side edge of the support plate 22 away from the main plate 21 along the third direction Z is formed with a clearance groove 223 recessed toward the main plate 21, and the clearance groove 223 is configured to clear the inlet portion 411 and the outlet portion 412.

As shown in FIG. 6, the clearance groove 223 may be formed at a middle position of the support portion, and a width of the clearance groove 223 may gradually decrease in a direction from the support plate 22 to the main plate 21. Thus, processing and forming of the clearance groove 223 can be facilitated, and stress concentration can be reduced.

In the above technical solution, by providing the clearance groove 223 on the support plate 22 for clearing the inlet portion 411 and the outlet portion 412 of the heat exchange tube 410, mutual interference between the support plate 22 and the inlet portion 411 and the outlet portion 412 can be reduced, and the layout can be more compact and reasonable.

In some embodiments of the present application, the plurality of plate bodies further include a reinforcing plate 30, where the reinforcing plate 30 extends along the first direction X, and the reinforcing plate 30 is disposed between the first plate 10 and the second plate 20, and is connected to the first plate 10 and the second plate 20.

The reinforcing plate 30 may be provided in one, or may be provided in plurality, and the reinforcing plate 30 may be a flat plate connected between the first plate 10 and the second plate 20, or may be a bent plate, which is not specifically limited in the present application.

In the above technical solution, since the reinforcing plate 30 is provided between the first plate 10 and the second plate 20, the reinforcing plate 30 can enhance the overall structural strength of the first expansion beam 100 and improve the swelling restraining effect on the battery cell 300.

In some embodiments of the present application, the reinforcing plate 30 includes a flat plate portion 31 and a bent portion 32, where the flat plate portion 31 is attached to and connected to a surface of the first plate 10, and the bent portion 32 is connected to the flat plate portion 31, and is formed as a U-shaped structure that extends along the first direction X and opens toward the first plate 10 along the second direction Y.

As shown in FIGs. 5 and 6, the reinforcing plate 30 may include a plurality of flat plate portions 31 and at least one bent portion 32, where the plurality of flat plate portions 31 may be arranged at intervals along a length direction or a height direction of the first expansion beam 100, a surface of the flat plate portion 31 may be attached to a side surface of the first plate 10 facing the second plate 20, the bent portion 32 is connected between two adjacent flat plate portions 31, specifically, two ends of the bent portion 32 are respectively connected to the two flat plate portions 31, and a middle portion of the bent portion 32 protrudes toward the second plate 20, and is connected to the second plate 20 by welding.

Further, the bent portion 32 includes two side plates and one bottom plate. The bottom plate is a flat plate extending along a length direction and a height direction of the first expansion beam 100, and a surface of the bottom plate is attached to a surface of the second plate 20 facing the first plate 10. The two side plates are respectively connected to two side edges of the bottom plate in a width direction, and extend toward the first plate 10 along a thickness direction of the first expansion beam 100 to connect to the flat plate portion 31. The side plate and the bottom plate may be arranged perpendicularly, and a connection position of the side plate and the bottom plate may be arc-connected to reduce stress concentration.

In the above technical solution, by configuring the reinforcing plate 30 to include the flat plate portion 31 connected to the first plate 10 and the bent portion 32 bent and protruding toward the second plate 20, not only can welding connection of the reinforcing plate 30 to the first plate 10 and the second plate 20 be facilitated, but also the structural strength of the reinforcing plate 30 can be improved, and the overall strength of the first expansion beam 100 can be improved.

In some embodiments of the present application, the bent portion 32 is provided in plurality, the plurality of bent portions 32 are arranged at intervals along the first direction X, and the flat plate portion 31 is connected between two adjacent ones of the bent portions 32 and connected to two sides of the plurality of bent portions 32 along the first direction X.

That is, the bent portion 32 may be provided in two, three, four, or more. In this way, in the height direction of the first expansion beam 100, the reinforcing plate 30 may be connected to the first plate 10 and the second plate 20 respectively through the plurality of flat plate portions 31 and the plurality of bent portions 32. This can improve the uniformity of structural reinforcement of the first plate 10 and the second plate 20 by the reinforcing plate 30 in a height direction of the first expansion beam 100, and enhance the overall structural strength of the first expansion beam 100.

For example, the reinforcing plate 30 may include three flat plate portions 31 and two bent portions 32, where the two bent portions 32 are arranged at intervals along up and down and connected between two adjacent flat plate portions 31.

Further, a plurality of weight reduction holes are formed on the bottom plate and/or the side plate of the bent portion 32, and the plurality of weight reduction holes are arranged at intervals along a length direction of the reinforcing plate 30. Accordingly, material consumption can be reduced, weight of the reinforcing plate 30 can be lowered, weight of the first expansion beam 100 can be lowered, and energy density of the battery device 1000 can be increased.

In the above technical solution, by providing the plurality of bent portions 32 on the reinforcing plate 30, the structural strength of the reinforcing plate 30 can be further enhanced, the structural strength of the first expansion beam 100 can be enhanced, and the uniformity of structural reinforcement of the first plate 10 and the second plate 20 by the reinforcing plate 30 in a height direction of the first expansion beam 100 can also be improved, and weak strength regions of the first expansion beam 100 can be reduced.

In some embodiments of the present application, the reinforcing plate 30 further includes a third bent edge 33, where the third bent edge 33 is connected to the flat plate portion 31, the third bent edge 33 has a plurality of second lugs 331 extending away from the first plate 10 along the second direction Y, the plurality of second lugs 331 are arranged at intervals along the first direction X, and the plurality of second lugs 331 are sandwiched between the first bent edge 212 and the second bent edge 222, and are connected by welding to the first bent edge 212 and the second bent edge 222.

As shown in FIG. 6, the third bent edge 33 includes a bent edge body and a plurality of second lugs 331. A flat plate portion 31 closest to the support plate 22 among the plurality of flat plate portions 31 is a first flat plate portion 31, the bent edge body is connected to a side edge of the first flat plate portion 31 close to the support plate 22, and the bent edge body is formed as an elongated plate shape extending from one end to another end along a length direction of the first expansion beam 100. The plurality of second lugs 331 are connected to a side edge of the bent edge body away from the first flat plate portion 31, and extend in a rectangular plate shape along a thickness direction and a length direction of the first expansion beam 100. A clearance hole for clearing the recess portion 2122 on the first bent edge 212 is defined between two adjacent second lugs 331.

During welding of the first expansion beam 100, the connection portion 2123 on the first bent edge 212, the second lug 331 on the third bent edge 33, and the first lug 2221 on the second bent edge 222 are sequentially stacked, and then the three layers of plates are connected by welding.

In the above technical solution, since the reinforcing plate 30 is further provided with the third bent edge 33, and the third bent edge 33 is connected between the first bent edge 212 and the second bent edge 222, the third bent edge 33 can enhance the connection strength at a connection position of the first bent edge 212 and the second bent edge 222, and improve the reliability of fastening connection of the first bent edge 212 to the main box 200. In addition, the plurality of second lugs 331 arranged at intervals can define clearance holes for clearing the recess portion 2122 of the first bent edge 212, and lower the probability of interference of the third bent edge 33 with fasteners passing through the first fixing hole 2121.

In some embodiments of the present application, the battery device 1000 further includes a first connection plate 510 and a second connection plate 520, where the first connection plate 510 is fixed to a side wall of the main box 200 by fasteners, two ends of the first plate 10 along the first direction X are provided with first connection holes 13 passing through the first plate 10 along the second direction Y, and the first plate 10 is fastened to the first connection plate 510 by fasteners passing through the first connection holes 13; and the second connection plate 520 is fixed to the side wall of the main box 200 by fasteners, two ends of the second plate 20 along the first direction X are provided with second connection holes 213 passing through the second plate 20 along the second direction Y, and the second plate 20 is fastened to the second connection plate 520 by fasteners passing through the second connection holes 213.

As shown in FIGs. 7 and 8, the first connection plate 510 is provided with a first hole and a second hole penetrating the first connection plate 510 along a thickness direction. One end of the first connection plate 510 is fixed to the side wall of the main box 200 by fasteners passing through the first hole and a first fastening hole on the side wall of the main box 200. Meanwhile, another end of the first connection plate 510 is fixedly connected to the first plate 10 by fasteners passing through the second hole and the first connection hole 13 on the first plate 10, that is, on the side where the first plate 10 is located, two ends of the first expansion beam 100 along the length direction are fixedly connected to the main box 200 via the first connection plate 510.

The second connection plate 520 is provided with a third hole and a fourth hole penetrating the second connection plate 520 along the thickness direction. One end of the second connection plate 520 is fixed to the side wall of the main box 200 by fasteners passing through the third hole and a second fastening hole on the side wall of the main box 200. Meanwhile, another end of the second connection plate 520 is fixedly connected to the second plate 20 by fasteners passing through the fourth hole and the second connection hole 213 on the second plate 20, that is, on the side where the second plate 20 is located, two ends of the first expansion beam 100 along the length direction are fixedly connected to the main box 200 via the second connection plate 520.

The first connection plate 510 is provided in two, and the two first connection plates 510 respectively fix two ends of the first plate 10 in the length direction to two inner side walls of the main box 200 opposite along the first direction X. The second connection plate 520 is provided in two, and the two second connection plates 520 respectively fix two ends of the second plate 20 in the length direction to two inner side walls of the main box 200 opposite along the first direction X.

In this way, two sides of the first expansion beam 100 in a thickness direction are respectively fixed to an inner wall of the main box 200 through the first connection plate 510 and the second connection plate 520, not only can fastening connection of the first expansion beam 100 to the main box 200 be conveniently achieved, but also the connection reliability between the first expansion beam 100 and the main box 200 can be improved.

Further, the first connection plate 510 and the second connection plate 520 are both connected to the first expansion beam 100 via rivet nuts. The first expansion beam 100 includes the reinforcing plate 30, where a hollow hole is formed on the flat plate portion 31 of the reinforcing plate 30, and the hollow hole is opposite to the first connection hole 13 on the first plate 10 along the thickness direction of the first expansion beam 100. This can reduce interference between the reinforcing plate 30 and the rivet nut passing through the first connection hole 13 while ensuring that the reinforcing plate 30 extends to end edges of two ends of the first plate 10 along the length direction.

In one example, the first connection plate 510 includes two sub-plate portions arranged in an L-shape. The two sub-plate portions are respectively attached to a surface of the first plate 10 and an inner wall surface of the main box 200, and further, the two sub-plate portions are arc-connected. Further, a first rib is formed at a connection position of the two sub-plate portions.

In one example, the second connection plate 520 includes a first section, a second section, and an inclined section connected between the first section and the second section, where the first section is a plate body and attached to the side wall of the main box 200, the third hole is formed on the first section, the second section is plate-shaped and attached to a surface of the second plate 20, and the fourth hole is formed on the second section. The inclined section is a plate body inclined relative to both the first section and the second section, and two ends of the inclined section are respectively arc-connected to the first section and the second section.

Further, a second rib is formed on the second connection plate 520, the second rib extends from one end of the second connection plate 520 along the first direction X to the other end to improve the structural strength of the second connection plate 520. The third hole is provided in plurality, and the plurality of third holes are respectively arranged on two sides of the second rib along the third direction Z. The fourth hole is provided in plurality, and the plurality of fourth holes are respectively arranged on two sides of the second rib.

In the above technical solution, since the battery device 1000 further includes the first connection plate 510 and the second connection plate 520, and two sides of the first expansion beam 100 in a thickness direction are respectively fixed to an inner wall of the main box 200 through the first connection plate 510 and the second connection plate 520, not only can fastening connection of the first expansion beam 100 to the main box 200 be conveniently achieved, but also the connection reliability between the first expansion beam 100 and the main box 200 can be improved.

In some embodiments of the present application, the mounting beam 600 extends along the first direction and is disposed on a side of the first expansion beam 100 away from the battery cell 300 along the second direction, the first expansion beam 100 is connected to the mounting beam 600 by fasteners and/or bonded to the mounting beam 600 by an adhesive layer 800, and the first direction intersects the second direction.

As shown in FIGs. 9 and 10, the mounting beam 600 and the first expansion beam 100 both extend along the first direction. The mounting beam 600 is disposed on a side of the first expansion beam 100 facing away from the battery cell 300; in other words, the first expansion beam 100 is disposed on a side of the mounting beam 600 facing the battery cell 300.

In one example, at least part of a surface of the first expansion beam 100 has an electrophoretic coating. Specifically, the first expansion beam 100 may be an integral member independent of the main box 200. After the first expansion beam 100 is formed, the first expansion beam 100 may be placed into an electrophoresis tank for electrophoresis to form an electrophoretic coating on a surface of the first expansion beam 100. The electrophoretic coating can lower the probability of corrosion of the first expansion beam 100 during long-term use of the battery device 1000, and improve the service life of the first expansion beam 100.

The first expansion beam 100 may be connected to the mounting beam 600 only by fasteners, or the first expansion beam 100 may be bonded to the mounting beam 600 only by the adhesive layer 800, or the first expansion beam 100 may be bonded to the mounting beam 600 by both fasteners and the adhesive layer 800.

The first expansion beam 100 may be directly bonded to the mounting beam 600 by the adhesive layer 800. Further, the adhesive layer 800 may be structural adhesive. Similarly, the first expansion beam 100 may be directly connected to the mounting beam 600 through fasteners, or may be indirectly fastened and connected to the mounting beam 600 by fasteners. Fasteners used for connection between the first expansion beam 100 and the mounting beam 600 include but are not limited to bolts, studs, and rivet nuts.

In the process of assembling the battery device 1000, surface treatments (such as insulation spraying and electrophoresis) of the main box 200, the first expansion beam 100, and/or the mounting beam 600 may be completed first. Then, the heat management member 400 is fixed to the bottom wall 202 of the main box 200. Next, the mounting beam 600 is fixed to the bottom wall 202 of the main box 200 by fasteners. Finally, the first expansion beam 100 is fixed to the mounting beam 600 by fasteners and the adhesive layer 800, and two ends of the first expansion beam 100 are fixed to the side wall of the main box 200 through the first connection plate 510 and the second connection plate 520.

In this way, not only can the heat exchange tube 410 of the heat management member 400 be embedded between the main box 200 and the first expansion beam 100, but also the main box 200, the mounting beam 600, and the first expansion beam 100 can be separately subjected to a surface treatment before assembly of the battery device, and the anti-corrosion performance and insulation performance of the main box 200, the first expansion beam 100, and the mounting beam 600 can be improved.

The electrophoretically treated first expansion beam 100 does not need to be welded to the main box 200 and the mounting beam 600, but is directly bonded to the mounting beam 600 and connected by fasteners, and connected to the main box 200 by fasteners. Thus, connection and fixation between the first expansion beam 100 and the mounting beam 600 can not be affected by the electrophoretic coating, and double connection between the mounting beam 600 and the first expansion beam 100 through fasteners and the adhesive layer 800 can further enhance the connection reliability and stability between the mounting beam 600 and the first expansion beam 100, and lower the probability of loosening and failure of fasteners due to long-term force bearing of the first expansion beam 100, thereby achieving reliable connection of the first expansion beam 100 to the mounting beam 600 under the condition of completing a surface treatment. In addition, assembly between the first expansion beam 100 and the mounting beam 600 can be facilitated, and assembly efficiency can be improved.

In the above technical solution, since the first expansion beam 100 is connected to the mounting beam 600 by fasteners and/or bonded to the mounting beam 600 by the adhesive layer 800, not only can assembly between the first expansion beam 100 and the mounting beam 600 be facilitated and assembly efficiency be improved, but also the first expansion beam 100 and the mounting beam 600 can undergo respective required surface pretreatments separately to improve the anti-corrosion performance and insulation performance of the first expansion beam 100 and the mounting beam 600, thereby improving flexibility of the surface treatments, saving treatment costs, and improving production efficiency. In addition, the first expansion beam 100 and the mounting beam 600 are fixedly connected by fasteners and the adhesive layer 800, which can further improve the connection reliability and stability between the first expansion beam 100 and the mounting beam 600.

In some embodiments of the present application, the first expansion beam 100 has a first bent edge 212 extending toward the mounting beam 600, the first bent edge 212 is supported on a top of the mounting beam 600, and the first bent edge 212 is connected to the mounting beam 600 by fasteners.

Referring to FIG. 5, the first expansion beam 100 includes the first plate 10, the second plate 20, and the reinforcing plate 30, where the second plate 20 includes the support plate 22 and the main plate 21, a lower side edge of the main plate 21 is provided with the first bent edge 212, an upper side edge of the support plate 22 is provided with the second bent edge 222, a lower side edge of the reinforcing plate 30 is provided with the third bent edge 33, and the first bent edge 212, the third bent edge 33, and the second bent edge 222 are sequentially stacked from top to bottom and connected by welding, and constitute a support edge of the first expansion beam 100. During assembly of the battery device 1000, the support edge is supported on the top of the mounting beam 600 and fixedly connected to the top of the mounting beam 600 by a plurality of fasteners. This can facilitate connection of the first expansion beam 100 to the mounting beam 600 and improve the assembly efficiency.

In the above technical solution, since the mounting beam 600 is disposed on one side of the first expansion beam 100 along the thickness direction, and the first expansion beam 100 is fastened to the top of the mounting beam 600 through the first bent edge 212, the first bent edge 212 can perform a positioning function, facilitate fixing the first expansion beam 100 to the mounting beam 600, and improve the assembly efficiency.

In some embodiments of the present application, as shown in FIG. 9 and FIG. 10, the mounting beam 600 includes two first beams 610, the two first beams 610 each extend along the first direction X and are arranged at intervals along the first direction X, the two first beams 610 are each fixed to the bottom wall 202 of the main box 200, and the clearance channel 203 is formed between the two first beams 610.

In the above technical solution, since the mounting beam 600 includes the two first beams 610 arranged at intervals, and the clearance channel 203 is formed between the two first beams 610, this facilitates forming the clearance channel 203, facilitates the passage of the inlet portion 411 and the outlet portion 412 of the heat exchange tube 410 through the mounting beam 600 to connect to the current collector 420, simplifies the structure, reduces the forming difficulty of the clearance channel 203, and reduces the processing difficulty of the mounting beam 600.

In some embodiments of the present application, the first beam 610 includes a beam body 611, a first support edge 612, and a second support edge 613, where the beam body 611 extends along the first direction X and has a U-shaped cross-section, the first support edge 612 and the second support edge 613 are respectively connected to two side edges of an opening of the beam body 611, and extend away from each other, the first support edge 612 and the second support edge 613 are each connected to the bottom wall 202 of the main box 200, the first support edge 612 is located on a side of the beam body 611 facing the first expansion beam 100, and a bottom surface of the first expansion beam 100 along the third direction Z is supported on the first support edge 612.

For example, as shown in FIGs. 9 to 11, a cross-section of the first beam 610 is in an inverted U shape, and an opening of the first beam 610 faces the bottom wall 202 of the main box 200. The U-shaped beam body 611 can enhance the structural strength of the first beam 610 and reduce the weight of the first beam 610. The first support edge 612 and the second support edge 613 are respectively provided on two sides of the beam body 611, which not only can increase a contact area between the first beam 610 and the bottom wall 202 of the main box 200, increase support stability between the first beam 610 and the bottom wall 202 of the main box 200, but also can facilitate fastening connection of the first beam 610 to the bottom wall 202 of the main box 200 via the first support edge 612 and/or the second support edge 613.

In the above technical solution, by configuring the first beam 610 to include the U-shaped beam body 611 as well as the first support edge 612 and the second support edge 613 that are connected to two side edges of the opening of the beam body 611, the structural strength of the first beam 610 can be improved, the support stability between the first beam 610 and the bottom wall 202 of the main box 200 can also be increased, and fastening connection of the first beam 610 to the main box 200 through the first support edge 612 and/or the second support edge 613 is facilitated.

In some embodiments of the present application, the first support edge 612 is bonded to a bottom surface of the first expansion beam 100 by the adhesive layer, and/or a side surface of the beam body 611 that faces the first support edge 612 in the second direction Y is bonded to the first expansion beam 100 by the adhesive layer 800.

That is, the adhesive layer 800 may be provided only on a surface of the first support edge 612 facing the first expansion beam 100 along the third direction Z for adhesive connection to the first expansion beam 100, or the adhesive layer 800 may be provided only on a side surface of the beam body 611 that faces the first support edge 612 in the second direction Y for adhesive connection to the first expansion beam 100, or the adhesive layer 800 may be provided on both the surface of the first support edge 612 facing the first expansion beam 100 along the third direction Z and the side surface of the beam body 611 that faces the first support edge 612 in the second direction Y for adhesive connection to the first expansion beam 100.

In the above technical solution, by providing the adhesive layer 800 on a surface of the first support edge 612 and/or a side surface of the beam body 611, adhesive connection between the first expansion beam 100 and the first beam 610 of the mounting beam 600 can be achieved, thereby achieving adhesive connection between the first expansion beam 100 and the mounting beam 600, further improving the connection reliability between the first expansion beam 100 and the mounting beam 600, reducing assembly difficulty, and improving assembly efficiency.

In some embodiments of the present application, the mounting beam 600 further includes a connection beam 620, where the connection beam 620 extends along the first direction X and is connected between the two first beams 610, the connection beam 620 is spaced apart from an inner wall of the accommodating cavity 201, and the connection beam 620, the two first beams 610, and the bottom wall 202 of the main box 200 enclose the clearance channel 203.

For example, as shown in FIGs. 9 to 11, the connection beam 620 may be a U-shaped beam opening toward the bottom wall 202 of the main box 200, and two ends of the connection beam 620 may be respectively connected to the two first beams 610 in an overlapping manner. Specifically, an end of the first beam 610 facing the connection beam 620 is a lap end, a dimensions of the beam body 611 of the lap end along the second direction Y and the third direction Z is smaller than a dimensions of the beam body 611 of the rest of the first beam 610, two ends of the connection beam 620 are both sleeved over the lap end, and the connection beam 620 and the beam body 611 of the lap end may be connected by fasteners. A side wall of the beam body 611 of the lap end is formed with a first through hole, and a side wall of the connection beam 620 is formed with a second through hole. The fastener may pass through the first through hole and the second through hole to achieve fastening connection between the connection beam 620 and the lap end.

An end edge of the connection beam 620 at the end of facing the bottom wall 202 of the main box 200 is spaced apart from the bottom wall 202 of the main box 200. For example, a spacing between the connection beam 620 and the bottom wall 202 of the main box 200 may be greater than or equal to 8 mm. In this way, a clearance channel 203 with sufficient height can be formed between the connection beam 620 and the bottom wall 202 of the main box 200, so that the inlet portion 411 and the outlet portion 412 of the heat exchange tube 410 can pass through the clearance channel 203.

In the above technical solution, since the mounting beam 600 further includes the connection beam 620, and the connection beam 620 is connected between the two mounting beams 600, the mounting beam 600 may be a continuous beam structure along the first direction X, and may continuously support the first expansion beam 100 along the first direction X, whereby the support stability of the mounting beam 600 to the first expansion beam 100 can be improved, and in addition, defining the clearance channel 203 can also be facilitated.

In some embodiments of the present application, the mounting beam 600 further includes a bracket 630, the bracket 630 is fixed to an inner wall of the accommodating cavity 201 and disposed between the two first beams 610, and the connection beam 620 is supported on the bracket 630.

The bracket 630 may be provided in one, and the bracket 630 may also be provided in plurality, for example, one, two, three, five, seven, or more brackets 630 may be arranged between the two first beams 610. Thus, the number of the brackets 630 may be set according to actual support needs, provided that the inlet portion 411 and the outlet portion 412 of the heat exchange tube 410 are not obstructed when extending through the mounting beam 600.

In the above technical solution, by providing the bracket 630 between the two first beams 610 for supporting the connection beam 620, the support effect on the connection beam 620 can be improved, the structural strength of the connection beam 620 can be enhanced, and the structural strength of the first expansion beam 100 can be further enhanced.

In some embodiments of the present application, the bracket 630 includes a support plate 631 and a plurality of support legs 632, where the plurality of support legs 632 are arranged along a circumferential direction of the support plate 631, each support leg 632 includes a support section 6321 and an extension section 6322 that are arranged in an L-shape, the support section 6321 is connected to the bottom wall 202 of the main box 200, the extension section 6322 extends away from the support section 6321 along the third direction Z, the support plate 631 is connected to ends of the extension sections 6322 of the plurality of support legs 632 away from the support section 6321, and the connection beam 620 is supported on the support plate 631 and fixed to the support plate 631 by fasteners.

For example, the support leg 632 may be provided in two, three, four, five, or more. By providing the plurality of support legs 632, the structural strength of the bracket 630 can be improved, and the uniform stress distribution of the support plate 631 in the circumferential direction of the support plate 631 can be improved.

Further, the bracket 630 is an integrally formed member, the support plate 631 and the support leg 632 may be arc-connected, and the support section 6321 and the extension section 6322 may also be arc-connected. Thus, stress concentration on the bracket 630 can be reduced.

For example, as shown in FIG. 10 and FIG. 11, the bracket 630 includes one support plate 631 and four support legs 632, where two of the four support legs 632 are symmetrically arranged about the first direction X, and the other two support legs 632 are symmetrically arranged about the second direction Y, the support plate 631 is arranged between the four support legs 632 and connected to the extension sections 6322 of the four support legs 632, and the support section 6321 is connected to an end of the extension section 6322 away from the support plate 631 along the third direction Z, and located on a side of the extension section 6322 away from the support plate 631 along the thickness direction. Thus, the bracket 630 can be conveniently supported on the bottom wall 202 of the main box 200, and mutual interference between the support sections 6321 of the plurality of support legs 632 can be reduced.

Further, a third through hole penetrating the support plate 631 along an up-down direction may be formed on the support plate 631, the connection beam 620 may be sleeved over an upper side of the bracket 630 and supported on the support plate 631, and then fixedly connected to the support plate 631 by fasteners passing through the third through hole.

In the above technical solution, since the bracket 630 includes the support plate 631 and the plurality of support legs 632 supporting the support plate 631, the structure of the bracket 630 can be simplified, the support stability of the bracket 630 to the connection beam 620 can be improved, and fixing connection of the connection beam 620 to the bracket 630 can be facilitated.

In some embodiments of the present application, the battery device 1000 may further include a second expansion beam 700, where the second expansion beam 700 extends along the first direction X and is arranged at an interval from the first expansion beam 100 along the second direction Y, the battery cell 300 is disposed between the first expansion beam 100 and the second expansion beam 700, and a structure of the second expansion beam 700 is identical to or different from a structure of the first expansion beam 100.

The battery device 1000 includes a plurality of rows of battery cells 300 sequentially arranged along the first direction X. Each row of battery cells 300 includes a plurality of battery cells 300 sequentially stacked along the second direction Y. The first expansion beam 100 and the second expansion beam 700 are respectively disposed on two sides of the plurality of battery cells 300 in the second direction Y, so as to limit swelling of the plurality of battery cells 300 along the second direction Y.

Further, a top of the first expansion beam 100 may be provided with a first fixing point, a top of the second expansion beam 700 may be provided with a second fixing point, and the first fixing point and the second fixing point may be connected by a pull rod. In this way, the anti-swelling force of the first expansion beam 100 and the second expansion beam 700 on the battery cell 300 can be enhanced, and swelling of the battery cell 300 can be effectively suppressed.

The first fixing point may be provided in plurality, the second fixing point may be provided in plurality, the pull rod is provided in plurality, and the plurality of first fixing points, the plurality of second fixing points, and the plurality of pull rods are in one-to-one correspondence.

In a specific example, the second expansion beam 700 may include the first plate 10, the second plate 20, and the reinforcing plate 30, where the reinforcing plate 30 is disposed between the first plate 10 and the second plate 20, the first plate 10, the second plate 20, and the reinforcing plate 30 may each be an integrally formed independent member, and the first plate 10, the second plate 20, and the reinforcing plate 30 may be connected by welding.

In the above technical solution, since the battery device 1000 further includes the second expansion beam 700, the second expansion beam 700 can cooperate with the first expansion beam 100 to jointly suppress swelling of the battery cell 300 along the second direction Y.

In some embodiments of the present application, the heat management member 400 includes a heat exchange tube 410, where a mounting groove 204 is formed on the bottom wall 202 of the main box 200, and the heat exchange tube 410 is disposed in the mounting groove 204 and extends along an extending direction of the mounting groove 204.

The mounting groove 204 may extend along an extending direction of the heat exchange tube 410, the heat exchange tube 410 is disposed in the mounting groove 204, and an upper surface of the heat exchange tube 410 may be flush with the bottom wall 202 of the main box 200 or protrude upward beyond the bottom wall 202 of the main box 200, so as to facilitate attachment to a bottom surface of the battery cell 300.

Further, an inner wall of the mounting groove 204 may be provided with an adhesive layer, and the heat exchange tube 410 may be bonded and fixed to the inner wall of the mounting groove 204 via the adhesive layer.

The heat exchange tube 410 of the heat management member 400 may be provided in plurality, and the plurality of heat exchange tubes 410 may be arranged at intervals. For example, the heat exchange tube 410 may be provided in two, and the two heat exchange tubes 410 are symmetrically arranged along the first direction X. Each heat exchange tube 410 includes a first heat exchange section and a second heat exchange section. The first heat exchange section is bent into a U-shape, and openings of the first heat exchange sections of the two heat exchange tubes 410 are arranged facing each other. The second heat exchange section is disposed on an inner side of the first heat exchange section and connected to the first heat exchange section. The second heat exchange section includes a plurality of straight tube portions extending along the second direction Y, where the plurality of straight tube portions are arranged at intervals along the first direction X and sequentially connected, and two adjacent straight tube portions are connected through a bent tube portion. A shape of the mounting groove matches a bent shape of the heat exchange tube 410.

In the above technical solution, since the mounting groove 204 is formed on the bottom wall 202 of the main box 200, and the heat exchange tube 410 is disposed in the mounting groove 204, arrangement of the heat exchange tube 410 can be facilitated, space occupied by the heat exchange tube 410 in the accommodating cavity 201 can be reduced, the structure can be compact, and the energy density of the battery device 1000 can be increased.

According to a second aspect, an embodiment of the present application provides an electrical device 1A including the battery device 1000 according to any one of the above embodiments.

In the above technical solution, since the electrical device 1A is provided with the above battery device 1000, and since the battery device 1000 is provided with a mounting beam 600, the first expansion beam 100 is mounted to the main box 200 via the mounting beam 600, and the inlet portion 411 and the outlet portion 412 of the heat management member 400 extend out through the clearance channel 203 formed by the mounting beam 600, which enables the heat management member 400 to be installed prior to the first expansion beam 100, and can reduce mutual influence between installation of the first expansion beam 100 and installation of the heat management member 400, resulting in higher installation efficiency. On the other hand, since the first expansion beam 100 and the mounting beam 600 are detachably fitted, the first expansion beam 100 and the mounting beam 600 may undergo respective required surface treatments separately; for example, the first expansion beam 100 may undergo anti-corrosion treatment, and the mounting beam 600 may undergo insulation treatment, which can improve flexibility of the surface treatments, save treatment costs, and improve production efficiency.

A battery device 1000 according to a specific embodiment of the present application will be described below with reference to FIGs. 2 to 11.

As shown in FIGs. 2, 3, and 4, the battery device 1000 includes a plurality of battery cells 300, a main box 200, a heat management member 400, a first expansion beam 100, a second expansion beam 700, a first connection plate 510, a second connection plate 520, a mounting beam 600, and two pull rods, where the plurality of battery cells 300 are disposed in the main box 200.

Specifically, the main box 200 defines an accommodating cavity 201 with a rectangular cross-section open at the top, the first expansion beam 100 and the second expansion beam 700 are both disposed in the accommodating cavity 201, the first expansion beam 100 and the second expansion beam 700 both extend along a width direction of the main box 200 and are arranged at intervals along a length direction of the main box 200, and the plurality of battery cells 300 are disposed between the first expansion beam 100 and the second expansion beam 700.

As shown in FIGs. 5 and 6, the first expansion beam 100 includes a first plate 10, a second plate 20, and a reinforcing plate 30, where the first plate 10 is a plate shape vertically disposed and extending left and right, an upper side edge of the first plate 10 is provided with a first flange 11, a lower side edge is provided with a second flange 12, and left and right two ends of the first plate 10 are respectively provided with first connection holes 13 passing through the first plate 10 along a front-rear direction.

The second plate 20 includes: a main plate 21 and a support plate 22, the main plate 21 is disposed on an upper side of the support plate 22, the main plate 21 is a plate shape vertically disposed and extending left and right, an upper side edge of the main plate 21 is provided with a third flange 211, a lower side edge is provided with a first bent edge 212, second connection holes 213 penetrating the main plate 21 in the front-rear direction are respectively formed at the left and right ends of the main plate 21, the first bent edge 212 includes connection portions 2123 and recess portions 2122 alternately arranged in the left-right direction, left and right two ends of the recess portion 2122 are respectively connected to the connection portion 2123 and a middle portion is recessed downward, each recess portion 2122 is formed with a first fixing hole 2121 penetrating in the up-down direction, and two adjacent recess portions 2122 cooperate with the connection portion 2123 to define a recessed groove.

The support plate 22 is a plate vertically disposed and extending left and right, an upper side edge of the support plate 22 is provided with a third bent edge 33, a lower side edge is provided with a fourth flange 221, the third bent edge 33 has a plurality of first lugs 2221 arranged at intervals along the left-right direction, a clearance notch 2222 is defined between two adjacent first lugs 2221. A lower side edge of the support plate 22 is formed with a clearance groove 223 recessed upward, and the clearance groove 223 is located at a middle position of the support plate 22 in the left-right direction.

The reinforcing plate 30 includes three flat plate portions 31, two bent portions 32, and one third bent edge 33, the flat plate portion 31 is a flat plate extending left and right and vertically disposed, the bent portion 32 is connected between two adjacent flat plate portions 31 along up and down, and a cross-section of the bent portion 32 is U-shaped opening toward the first plate 10. The third bent edge 33 is horizontally disposed and connected to a lower side edge of the lowermost flat plate portion 31, the third bent edge 33 has a plurality of second lugs 331 arranged at intervals in the left-right direction, the plurality of second lugs 331, the plurality of first lugs 2221, and the plurality of connection portions 2123 correspond one-to-one, and each second lug 331 is sandwiched between the corresponding connection portion 2123 and the first lug 2221.

Further, a plurality of welding holes are formed on the main plate 21, the welding holes are elongated holes extending along the left-right direction, the plurality of welding holes correspond to the bent portions 32 of the reinforcing plate 30, and the main plate 21 may be connected by welding to the bent portions 32 of the reinforcing plate 30 at positions of the plurality of welding holes.

The first connection plate 510 is provided in two, and the two first connection plates 510 are respectively disposed at two ends of the first plate 10 in the left-right direction, one end of the first connection plate 510 is connected to the first plate 10 by fasteners, and the other end is also connected to side walls of the main box 200 in the left-right direction by fasteners. The second connection plate 520 is provided in two, and the two second connection plates 520 are respectively disposed at two ends of the main plate 21 in the left-right direction, one end of the second connection plate 520 is fixedly connected to the second plate 20 by fasteners, and the other end is also connected to side walls of the main box 200 in the left-right direction by fasteners.

The mounting beam 600 includes two first beams 610, one connection beam 620, and one bracket 630, where the two first beams 610 are arranged at left and right intervals, a cross-section of the first beam 610 is in an inverted U shape and fixed on the bottom wall 202 of the main box 200, the bracket 630 is a four-claw bracket 630, the bracket 630 is disposed between the two first beams 610, two ends of the connection beam 620 are lapped with the two first beams 610, and a middle portion of the connection beam 620 is supported on the bracket 630.

The assembly process of the battery device 1000 of this embodiment is described below.

Step 1. Assemble the first expansion beam 100. Specifically, four sheet metal parts, namely, the first plate 10, the main plate 21, the support plate 22, and the reinforcing plate 30, are assembled and welded into an integral body to form the first expansion beam 100. Thereafter, the first expansion beam 100 is subjected to electrophoresis in advance to form an electrophoretic coating on a surface of the first expansion beam 100. During welding of the first expansion beam 100, the first flange 11 and the third flange 211 are lap-welded together, and the second flange 12 and the fourth flange 221 are lap-welded together. The first bent edge 212, the second bent edge 222, and the third bent edge 33 are welded together in a three-layer plate structure. The first plate 10 is connected to the flat plate portion 31 of the reinforcing plate 30 by spot welding, and the main plate 21 is connected to the bent portion 32 of the reinforcing plate 30 by welding.

Step 2. Assemble the main box 200, the cold plate, and the mounting beam 600. Specifically, the two first beams 610 and the bracket 630 of the mounting beam 600 are connected to the main box 200 by welding, then the main box 200 (welded with the first beam 610 and the bracket 630) is subjected to electrophoresis. Insulation spraying is performed on a portion of the bottom wall 202 of the main box 200 corresponding to the battery cell 300. Next, the heat management member 400 is adhered to the bottom wall 202 of the main box 200. Finally, the connection beam 620 of the mounting beam 600 is fixed to the two first beams 610 and the bracket 630 by fasteners.

Step 3. Fix the first expansion beam 100 to the main box 200. Specifically, the first expansion beam 100 obtained in step one is supported on the mounting beam 600, a side wall of the beam body 611 of the first beam 610 and an upper surface of the first support edge 612 are bonded to the first expansion beam 100, and the first expansion beam 100 is riveted and connected to the mounting beam 600, then two ends of the first connection plate 510 are respectively fastened and connected to the first plate 10 of the first expansion beam 100 and left and right two side walls of the main box 200, and the second connection plate 520 is respectively fastened and connected to the second plate 20 of the first expansion beam 100 and left and right two side walls of the main box 200.

According to the battery device 1000 of this embodiment, the first expansion beam 100 is an independent integral member, and after the first expansion beam 100, the mounting beam 600, and the main box 200 are respectively pre-completed with surface treatments (electrophoresis and insulation spraying), the first expansion beam 100 can be reliably connected to the main box 200 via fasteners and the adhesive layer 800.

In conclusion, it should be noted that the foregoing embodiments are for description of the technical solutions of the present application only rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. However, these modifications or replacements do not make the essence of the corresponding technical solutions deviate from the scope of the technical solutions of the embodiments of the present application, and they should all be included in the scope of the claims and description of the present application. In particular, as long as there is no structural conflict, the various technical features mentioned in the embodiments can be combined in any manner. The present application is not limited to the specific embodiments disclosed in this specification but includes all technical solutions falling within the scope of the claims.

## Claims

1. A battery device, **characterized by** comprising:
a main box (200), the main box (200) defining an accommodating cavity (201);
a battery cell (300) disposed in the accommodating cavity (201);
a mounting beam (600) mounted to a bottom wall (202) of the main box (200) and cooperating with the bottom wall (202) to jointly form a clearance channel (203);
a first expansion beam (100) detachably mounted to the mounting beam (600) and cooperating with the battery cell (300); and
a heat management member (400) disposed in the accommodating cavity (201) and cooperating with the battery cell (300) for heat exchange, the heat management member (400) having an inlet portion (411) and an outlet portion (412), at least one of the inlet portion (411) and the outlet portion (412) extending through the clearance channel (203).

2. The battery device according to claim 1, **characterized in that** the first expansion beam (100) comprises a plurality of plate bodies, wherein the plurality of plate bodies are all sheet metal parts, and the plurality of plate bodies are welded to each other to constitute the first expansion beam (100).

3. The battery device according to claim 2, **characterized in that** the plurality of plate bodies comprise a first plate (10) and a second plate (20), wherein the first plate (10) and the second plate (20) extend along a first direction (X) and are arranged along a second direction (Y), along a third direction (Z), two ends of the first plate (10) are respectively connected to two ends of the second plate (20) and cooperate to define a cavity of the first expansion beam (100), and the first direction (X), the second direction (Y), and the third direction (Z) intersect each other pairwise.

4. The battery device according to claim 3, **characterized in that** along the third direction (Z), two ends of the first plate (10) have a first flange (11) and a second flange (12) that extend toward the second plate (20), two ends of the second plate (20) have a third flange (211) and a fourth flange (221) that extend toward the first plate (10), the first flange (11) is connected to the third flange (211) in an overlapping manner, and the second flange (12) is connected to the fourth flange (221) in an overlapping manner.

5. The battery device according to claim 3 or 4, **characterized in that** the second plate (20) comprises a main plate (21) and a support plate (22) that are arranged separately, wherein the main plate (21) is disposed on a side of the support plate (22) away from the bottom wall (202) along the third direction (Z), the main plate (21) is provided with a first bent edge (212) extending away from the second plate (20) along the second direction (Y), the support plate (22) is provided with a second bent edge (222) extending away from the second plate (20) along the second direction (Y), and the first bent edge (212) and the second bent edge (222) are arranged in a stacked manner and connected to each other.

6. The battery device according to claim 5, **characterized in that** the first bent edge (212) is formed with a plurality of first fixing holes (2121) passing through the first bent edge (212) along the third direction (Z), the plurality of first fixing holes (2121) are arranged at intervals along the first direction (X), and the first expansion beam (100) is connected to the mounting beam (600) by fasteners passing through the first fixing holes (2121).

7. The battery device according to claim 6, **characterized in that** the first bent edge (212) comprises a plurality of connection portions (2123) and a plurality of recess portions (2122), wherein the plurality of recess portions (2122) and the plurality of connection portions (2123) are alternately arranged and connected along the first direction, the recess portion (2122) is formed by recessing the first bent edge (212) toward the support plate (22), and each recess portion (2122) is formed with at least one first fixing hole (2121); and
the second bent edge (222) comprises a plurality of first lugs (2221) extending away from the first plate (10) along the second direction (Y), wherein the plurality of first lugs (2221) are arranged at intervals along the first direction (X), and a clearance notch (2222) is defined between two adjacent first lugs (2221);
wherein the recess portion (2122) is located in the clearance notch (2222), and the plurality of connection portions (2123) are in one-to-one correspondence with and connected to the plurality of first lugs (2221).

8. The battery device according to any one of claims 5 to 7, **characterized in that** a side edge of the support plate (22) away from the main plate (21) along the third direction (Z) is formed with a clearance groove (223) recessed toward the main plate (21), and the clearance groove (223) is configured to clear the inlet portion (411) and the outlet portion (412).

9. The battery device according to any one of claims 5 to 8, **characterized in that** the plurality of plate bodies further comprise a reinforcing plate (30), wherein the reinforcing plate (30) extends along the first direction (X), and the reinforcing plate (30) is disposed between the first plate (10) and the second plate (20), and is connected to the first plate (10) and the second plate (20).

10. The battery device according to claim 9, **characterized in that** the reinforcing plate (30) comprises a flat plate portion (31) and a bent portion (32), wherein the flat plate portion (31) is attached to and connected to a surface of the first plate (10), the bent portion (32) is connected to the flat plate portion (31), and is formed as a U-shaped structure that extends along the first direction (X) and opens toward the first plate (10) along the second direction (Y).

11. The battery device according to claim 10, **characterized in that** the bent portion (32) is provided in plurality, the plurality of bent portions (32) are arranged at intervals along the first direction (X), and the flat plate portion (31) is connected between two adjacent ones of the bent portions (32) and connected to two sides of the plurality of bent portions (32) along the first direction (X).

12. The battery device according to any one of claim 10 or 11, **characterized in that** the reinforcing plate (30) further comprises a third bent edge (33), wherein the third bent edge (33) is connected to the flat plate portion (31), the third bent edge (33) has a plurality of second lugs (331) extending away from the first plate (10) along the second direction (Y), the plurality of second lugs (331) are arranged at intervals along the first direction (X), and the plurality of second lugs (331) are sandwiched between the first bent edge (212) and the second bent edge (222), and are connected by welding to the first bent edge (212) and the second bent edge (222).

13. The battery device according to any one of claims 3 to 12, **characterized by** further comprising:
a first connection plate (510), wherein the first connection plate (510) is fixed to a side wall of the main box (200) by fasteners, two ends of the first plate (10) along the first direction (X) are provided with first connection holes (13) passing through the first plate (10) along the second direction (Y), and the first plate (10) is fastened to the first connection plate (510) by fasteners passing through the first connection holes (13); and
a second connection plate (520), wherein the second connection plate (520) is fixed to a side wall of the main box (200) by fasteners, two ends of the second plate (20) along the first direction (X) are provided with second connection holes (213) passing through the second plate (20) along the second direction (Y), and the second plate (20) is fastened to the second connection plate (520) by fasteners passing through the second connection holes (213).

14. The battery device according to any one of claims 1 to 13, **characterized in that** the mounting beam (600) extends along a first direction and is disposed on a side of the first expansion beam (100) away from the battery cell (300) along a second direction, the first expansion beam is connected to the mounting beam by fasteners and/or bonded to the mounting beam by an adhesive layer (800), and the first direction intersects the second direction.

15. The battery device according to claim 14, **characterized in that** the first expansion beam (100) has a first bent edge (212) extending toward the mounting beam (600), the first bent edge (212) is supported on a top of the mounting beam (600), and the first bent edge (212) is connected to the mounting beam (600) by fasteners.

16. The battery device according to claim 15, **characterized in that** the mounting beam (600) comprises two first beams (610), wherein the two first beams (610) each extend along a first direction and are arranged at intervals along the first direction (X), the two first beams (610) are each fixed to the bottom wall (202), and the clearance channel is formed between the two first beams (610).

17. The battery device according to claim 16, **characterized in that** the first beam (610) comprises a beam body (611), a first support edge (612), and a second support edge (613), wherein the beam body (611) extends along a first direction (X) and has a U-shaped cross-section, the first support edge (612) and the second support edge (613) are respectively connected to two side edges of an opening of the beam body (611) and extend away from each other, and the first support edge (612) and the second support edge (613) are each connected to the bottom wall (202); and
the first support edge (612) is located on a side of the beam body (611) facing the first expansion beam (100), and a bottom surface of the first expansion beam (100) along a third direction (Z) is supported on the first support edge (612).

18. The battery device according to claim 17, **characterized in that** the first support edge (612) is bonded to a bottom surface of the first expansion beam by the adhesive layer (800), and/or a side surface of the beam body (611) that faces the first support edge (612) in a second direction (Y) is bonded to the first expansion beam (100) by the adhesive layer (800).

19. The battery device according to any one of claims 16 to 18, **characterized in that** the mounting beam (600) further comprises a connection beam (620), wherein the connection beam (620) extends along the first direction (X) and is connected between the two first beams (610), the connection beam (620) is spaced apart from an inner wall of the accommodating cavity, and the connection beam (620), the two first beams (610), and the bottom wall (202) enclose the clearance channel.

20. The battery device according to claim 19, **characterized in that** the mounting beam (600) further comprises a bracket (630), wherein the bracket (630) is fixed to the bottom wall (202) and disposed between the two first beams (610), and the connection beam (620) is supported on the bracket (630).

21. The battery device according to claim 20, **characterized in that** the bracket (630) comprises a support plate (631) and a plurality of support legs (632), wherein the plurality of support legs (632) are arranged along a circumferential direction of the support plate (631), each support leg (632) comprises a support section (6321) and an extension section (6322) that are arranged in an L-shape, the support section (6321) is connected to the bottom wall (202), the extension section (6322) extends away from the support section (6321) along a third direction (Z), the support plate (631) is connected to ends of the extension sections (6322) of the plurality of support legs (632) away from the support section (6321), and the connection beam (620) is supported on the support plate (631) and fixed to the support plate (631) by fasteners.

22. The battery device according to any one of claims 1 to 21, **characterized in that** the battery device further comprises a second expansion beam (700), wherein the second expansion beam (700) extends along a first direction (X) and is arranged at an interval from the first expansion beam (100) along a second direction (Y), the battery cell (300) is disposed between the first expansion beam and the second expansion beam, and a structure of the second expansion beam (700) is identical to or different from a structure of the first expansion beam (100).

23. The battery device according to any one of claims 1 to 22, **characterized in that** the heat management member (400) comprises a heat exchange tube (410), wherein a mounting groove (204) is formed on the bottom wall (202), and the heat exchange tube (410) is disposed in the mounting groove (204) and extends along an extending direction of the mounting groove (204).

24. An electrical device, **characterized by** comprising the battery device (1000) according to any one of claims 1 to 23.
